# EUROPÄISCHE PATENTSCHRIFT

(11) **EP 2 875 383 B1**
(45) Veröffentlichungstag und Bekanntmachung des Hinweises auf die Patenterteilung: **27.02.2019**
(21) Anmeldenummer: 13735346.2
(22) Anmeldetag: 12.07.2013
(51) Int. Cl.: G01S 7/497, G01S 17/66

(54) **LASERTRACKER MIT KALIBRIEREINHEIT ZUR SELBSTKALIBRIERUNG**
LASER TRACKER WITH CALIBRATION UNIT FOR SELF-CALIBRATION
APPAREIL DE SUIVI LASER AVEC UNITÉ DE CALIBRAGE POUR CALIBRAGE AUTOMATIQUE

(30) Priorität: 19.07.2012 EP 12177021
(43) Veröffentlichungstag der Anmeldung: 27.05.2015
(73) Patentinhaber: Leica Geosystems AG, 9435 Heerbrugg (CH)
(72) Erfinder: LÜTHI, Thomas, CH-5000 Aarau (CH); KÜPFER, Manfred, 79761 Waldshut-Tiengen (DE)
(74) Vertreter: Kaminski Harmann
(86) Internationale Anmeldenummer: PCT/EP2013/064841
(87) Internationale Veröffentlichungsnummer: WO 2014/012864

(56) Entgegenhaltungen:
- EP-A1- 0 082 598
- WO-A1-2010/148525
- WO-A2-2005/026772

## Beschreibung

Die Erfindung betrifft einen Lasertracker zur fortlaufenden Verfolgung eines Ziels nach dem Oberbegriff des Anspruchs 1, ein Kalibrierverfahren zum Bestimmen von mindestens einem Kalibrierparameter für einen Lasertracker nach Anspruch 12 und ein Computerprogrammprodukt nach Anspruch 15.

Messgeräte, die für eine fortlaufende Verfolgung eines Zielpunkts und eine koordinative Positionsbestimmung dieses Punkts ausgebildet sind, können allgemein, insbesondere im Zusammenhang mit industrieller Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zum Messgerät reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lagen zueinander bekannt sind, kann auf eine Orientierung des Instruments und eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Ausserdem wird in modernen Trackersystemen - zunehmend standardisiert - auf einem Sensor eine Ablage des empfangenen Messstrahls von einem so genannten Servokontrollpunkt ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Vermessungsgerät bestimmt werden.

Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder gänzlich zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1bekannt. In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Die in diesem Zusammenhang für die Distanzmessung eingesetzten Interferometer verwenden hauptsächlich - aufgrund der grossen Kohärenzlänge und der damit ermöglichten Messreichweite - Gaslaser als Lichtquellen, insbesondere HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Durch die Verwendung eines solchen Interferometers zur Distanzbestimmung bzw. Bestimmung der Distanzänderung in einem Lasertracker kann aufgrund des so einsetzbaren interferometrischen Messverfahrens eine sehr hohe Messgenauigkeit realisiert werden.

Zur Gewährleistung hoher Messgenauigkeiten muss das Trackersystem vor Ausführung von Messungen kalibriert werden. Eine solche Kalibrierung kann einerseits vor Auslieferung des Geräts durchgeführt werden, sodass beispielsweise ein Versatz von einer durch den strukturellen Aufbau des Trackers vorgegebenen Zielachse zu einer Emissionsachse entlang derer die Messstrahlung emittiert wird vorab bekannt ist und bei der Durchführung von Messungen berücksichtigt wird. Andererseits kann und muss eine Re-Kalibrierung nach einer gewissen Betriebszeit des Systems erfolgen, da z.B. durch Umwelteinflüsse (z.B. Temperatur- und/oder Druckschwankungen) oder mechanische Einwirkungen (z.B. Stösse) Fehler im System auftreten können.

Zudem ist eine Feinkalibrierung hinsichtlich sehr sensibler Bauteile bzw. bei einer relativ intensiven Beanspruchung des Messgeräts in kürzeren Intervallen (z.B. bei jeder Inbetriebnahme) vorzusehen um geforderte Genauigkeiten dauerhaft und fortlaufend einzuhalten.

Eine solche Kalibrierung kann insbesondere durch mehrere Zweilagenmessungen mit deutlichen Distanzunterschieden zu einem oder mehreren separaten und räumlich frei versetzbaren Referenzzielen bereitgestellt werden. Hieraus können Kalibrierwerte für z.B. einen PSD-Offset, einen Zielachsenabstand (=paralleler Versatz) und/oder einen Zielachsenfehler (=Richtungsfehler) abgeleitet werden. Eine derartige Kalibrierung ist beispielsweise für die Lasertracker "AT901" und "AT401" der Leica Geosystems AG vorgesehen.

Dieses konventionelle Vorgehen zur Kalibrierung steht insbesondere im Widerspruch mit einer generellen Anforderung, dass alle notwendigen Komponenten zur Kalibrierung im Trackersystem integriert oder daran permanent angebracht sein sollen.

Zudem liesse sich eine solche Methode nur dann ohne einen Benutzereingriff durchführen, wenn sich das Messsystem in einer festen Installation befindet, bei der ein entfernter Reflektor permanent installiert werden kann z.B. an einer gegenüberliegenden Gebäudewand. Jedoch kann für eine Anwendung eines Lasertrackers als mobiles Messsystem in wechselnder Umgebung eine solche Kalibrierung mit örtlich festen Retroreflektoren nicht durchgeführt werden.

Zur Überwindung dieser Hindernisse offenbart die US 7,327,446 B2 eine Anordnung zweier unterschiedlicher reflektierender Objekte an einem Lasertracker zu dessen Kalibrierung. Eines dieser Objekte ist ausgeführt als Würfelprisma, das zweite als Planspiegel, wobei eine Selbstkalibrierung des Trackers durch Anzielen von sowohl dem Würfelprisma als auch dem Planspiegel durchführbar ist.

Speziell durch die Forderung, dass sich die für die Selbstkompensation benötigten Komponenten (Spiegel und Prisma) im oder am Tracker befinden, können die Kalibriermessungen jedoch nur bei im Wesentlichen gleichen und relativ kurzen Distanz ausgeführt werden. Dadurch kann insbesondere keine Kalibrierung des Systems hinsichtlich deutlich unterschiedlicher Distanzen und insbesondere hinsichtlich verhältnismässig grosser Distanzen (mindestens mehrere Meter), die bei einem typischen Einsatz eines solchen Trackers auftreten, ausgeführt werden. Dies stellt einen Hauptnachteil dieser Ausführungsform hinsichtlich einer möglichst robusten und damit für den abzudeckenden Messbereich gültigen und verlässlichen Kalibrierung dar. Für typische Kalibrierverfahren - wie oben erwähnt - ist auch die Notwendigkeit eines Benutzereingriffs für die Kalibrierung als Hauptnachteil zu nennen.

Es ist daher Aufgabe der vorliegenden Erfindung einen verbesserten Lasertracker bereitzustellen, der mittels trackereigenen Mitteln so kalibrierbar ist, dass Abweichungen von einem strukturellen Sollaufbau des Trackers, insbesondere hinsichtlich der Führung einer Tracker-Messlaserstrahlung, schneller und präziser bestimmbar sind, insbesondere wobei die Kalibrierung für sowohl Ziele in relativ geringen als auch in grösseren Entfernungen präzise gewährleistet ist.

Eine weitere Aufgabe der Erfindung ist es verbesserte integrierte Kalibriermittel für einen Lasertracker und ein automatisiertes Kalibrieren des Trackers derart bereitzustellen, dass die Ermittlung von Kalibrierwerten schneller, präziser und robuster durchführbar ist, sodass die Kalibrierung weitestgehend für einen gesamten Messbereich des Trackers gültig ist, insbesondere ohne Benutzereingriff und für grosse Distanzen.

Eine spezielle Aufgabe der vorliegenden Erfindung ist es einen verbesserten selbstkalibrierbaren Lasertracker bereitzustellen, wobei für die Kalibrierung mehrere Messungen für deutlich unterschiedliche Distanzen durchgeführt werden.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur Positionsbestimmung eines Ziels, insbesondere zur fortlaufenden Verfolgung des Ziels, mit einer Strahlquelle zur Erzeugung von Messstrahlung, einer eine Stehachse definierenden Basis und einer Stütze, die eine im Wesentlichen orthogonal zur Stehachse stehende Kippachse definiert, wobei die Stütze relativ zur Basis um die Stehachse motorisiert schwenkbar ist und ein Horizontalschwenkwinkel durch eine Ausrichtung der Stütze relativ zur Basis definiert wird. Zudem verfügt der Lasertracker über eine um die Kippachse relativ zur Stütze motorisiert schwenkbare Strahllenkeinheit, wobei ein Vertikalschwenkwinkel durch eine Ausrichtung der Strahllenkeinheit relativ zur Stütze definiert wird, zur Emission und Ausrichtung der Messstrahlung und zum Empfang von zumindest einem Teil der am Ziel reflektierten

Messstrahlung, über Winkelmessfunktionalität zur Bestimmung des Horizontalschwenkwinkels und des Vertikalschwenkwinkels, über Entfernungsmessfunktionalität und über einen photosensitiven Flächendetektor zur Detektion einer Auftreffposition der reflektierten Messstrahlung auf dem Flächendetektor und zur Erzeugung eines Ausgangssignals zur Steuerung einer Zielverfolgungsfunktionalität.

Erfindungsgemäss weist die Basis eine Selbstkalibriereinheit mit mindestens einem ersten retro-reflektierenden Referenzziel und mindestens einer als Verkleinerungsobjektiv wirkenden optischen Baugruppe auf. Die Selbstkalibriereinheit ist zur Bestimmung von zumindest einem Kalibrierparameter bezüglich einer Position und/oder Richtung der Messstrahlung für den Lasertracker mit der Messstrahlung derart anzielbar, dass ein optischer Strahlengang der Messstrahlung durch die optische Baugruppe verläuft und die Messstrahlung auf das mindestens erste retro-reflektierende Referenzziel trifft, wodurch eine erste Kalibriermessung mit einer hinsichtlich relevanter Messgrössen für die Bestimmung des zumindest einen Kalibrierparameters simulierten Distanz zu dem mindestens ersten retro-reflektierenden Referenzziel durchführbar ist und die simulierte Distanz grösser ist als eine tatsächlich strukturell gegebene Entfernung zu dem mindestens ersten retro-reflektierenden Referenzziel.

Als simulierte Distanz wird im Zusammenhang mit der vorliegenden Erfindung eine Distanz zum Referenzziel verstanden, die insbesondere für die Bestimmung der relevanten Messgrössen zur Bestimmung des zumindest einen Kalibrierparameters "gesehen" werden kann, jedoch kaum einen (bzw. keinen) Einfluss auf eine allfällige Distanzmessung zum Referenzziel bewirkt. Durch die optische Baugruppe wird insbesondere die Richtung der Messstrahlung so verändert, dass die Messgrössen bei einer Messung zu dem Referenzziel so bestimmbar sind, als ob das Referenzziel weiter entfernt wäre als dieses tatsächlich entfernt ist, wodurch somit eine simulierte Distanz zum Ziel für die Bestimmung dieser Grössen vorliegt.

Insbesondere sind die relevanten Messgrössen dabei repräsentiert durch den Horizontalschwenkwinkel, den Vertikalschwenkwinkel und/oder die Auftreffposition auf dem photosensitiven Flächendetektor. D.h. also dass die Horizontalschwenkwinkel, Vertikalschwenkwinkel und die Auftreffposition bei einer Kalibriermessung, bei der die Messstrahlung durch die optische Baugruppe auf das Referenzziel trifft, so bestimmbar sind, als ob das Referenzziel in einer grösseren Entfernung z.B. zum Flächendetektor angeordnet ist, als die strukturelle Entfernung zum Referenzziel wirklich ist.

Durch die erfindungsgemässe Anordnung der optischen Baugruppe vor dem Referenz-Retroreflektor kann - dadurch dass die optische Baugruppe wie eine Verkleinerungsoptik wirkt - der am Tracker angeordnete Retroreflektor so angemessen werden als befände sich dieser in einer grösseren Entfernung von z.B. der Strahllenkeinheit als sich dieser strukturell tatsächlich befindet. Somit kann eine Kalibrierung des Trackers so erfolgen, als ob zumindest ein Referenzziel in relativ grosser Entfernung (bezogen auf die relevanten Messgrössen) angezielt würde.

Als positionssensitiver Flächendetektor bzw. PSD (insbesondere Tracking-Flächensensor) ist im Zusammenhang mit vorliegender Erfindung zumindest ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell (Mikrosekundenbereich) und mit einer Nanometer-Auflösung erfolgen. Insbesondere sind auch digital arbeitende Sensoren als PSD vorsehbar, welche eine vergleichbare Bestimmung eines Schwerpunkts einer Lichtverteilung auf der Sensorfläche erlauben.

Mittels PSD kann eine Ablage des Auftreffpunkts des erfassten Strahls von einem Servokontrollpunkt bestimmt und auf Basis der Ablage ein Nachführen des Laserstahls auf das Ziel erfolgen. Zu diesem Zweck und zum Erreichen einer hohen Genauigkeit kann das Sichtfeld dieser PSD vergleichsweise klein gewählt sein, d.h. korrespondierend zum Strahldurchmesser des Messlaserstrahls. Eine Erfassung mit der PSD erfolgt typischerweise koaxial zur Messachse, sodass die Erfassungsrichtung der PSD der Messrichtung entspricht. Die Anwendung des PSD-basierten Trackings und der Feinanzielung kann erst erfolgen, nachdem der Messlaser auf ein retro-reflektierende Ziel ausgerichtet worden ist (zumindest grob, d.h. derart, dass das Ziel innerhalb des Sichtfelds der PSD liegt).

Der zumindest eine Kalibrierparameter, zu dessen Bestimmung der erfindungsgemässe Lasertracker ausgeführt ist, kann eine Vielzahl von z.B. durch Umwelteinflüsse veränderlichen Gerätegrössen repräsentieren. Diese Grössen können sich massgeblich auf die erreichbare Genauigkeit des Trackers auswirken. Die Anforderung einer exakten Bekanntheit der jeweiligen Grössen ist somit für die Durchführung einer Messung mit dem Tracker gegeben und kann mit dem erfindungsgemässen Tracker - zumindest hinsichtlich der im Folgenden angegebenen Parameter für den Verlauf der Messstrahlung - erfüllt werden.

Der bestimmbare Kalibrierparameter gibt erfindungsgemäss zumindest einen Servokontrollpunkt auf dem positionssensitiven Flächendetektor zur Regelung der Ausrichtung der Messstrahlung auf das Ziel im Rahmen der Zielverfolgungsfunktionalität an und/oder zeigt einen Versatz, insbesondere parallelen Versatz, zwischen einer durch eine strukturelle Ausbildung der Strahllenkeinheit definierten Zielachse und einer durch die Emission der Messstrahlung definierten Emissionsachse an und/oder gibt einen einen Winkelversatz zwischen der Zielachse und der Emissionsachse angebenden Zielachsenfehler an.

Durch den Servokontrollpunkt wird ein PSD-Offset (der Abstand zwischen einem elektrischen Nullpunkt eines für das Tracking vorgesehenen positionssensitiven Flächensensors und dem Servokontrollpunkt, der eine exakte Ausrichtung in x- bzw. y-Richtung der Messstrahlung auf das Zentrum eines retro-reflektierenden Ziels repräsentiert und von dort reflektiert auf diesem Sensorpunkt auftrifft) definiert. Der Versatz zwischen Zielachse und Emissionsachse ist auch bekannt als Zielachsenabstand (Abstand einer durch eine Emissionsrichtung der Messachse definierte Emissionsachse zu einer strukturell durch die Ausgestaltung einer Strahllenkeinheit gegebene Zielachse bzw. zu einer Kippachse, die durch die Stütze definiert ist). Der Zielachsenfehler (= Richtungsfehler) zeigt eine Abweichungen von einer Parallelität zwischen Emissionsachse und Zielachse an.

Hinsichtlich der Ausgestaltung der optischen Baugruppe kann diese erfindungsgemäss zumindest zwei optische Elemente, insbesondere diffraktive optische Elemente, zur Formung der Messstrahlung aufweisen, insbesondere wobei zumindest eine Stahlquerschnittsfläche der Messstrahlung verkleinerbar ist und/oder eine Richtung der Messstrahlung veränderbar ist. Hierzu können beispielsweise Spiegel, oder - insbesondere als diffraktive optische Elemente - Linsen oder alternative strahlformende Mittels eingesetzt werden.

Durch die jeweilige Ausbildung der optischen Baugruppe kann die Baugruppe einen bestimmten Abbildungsparameter aufweisen, um den gewünschten verkleinernden Effekt zu bewirken. Erfindungsgemäss kann die optische Baugruppe in diesem Zusammenhang einen bestimmten optischen Abbildungsmassstab im Bereich zwischen 0 und 1 definieren.

Bezüglich des Aspekts der Kalibrierung des Lasertrackers kann erfindungsgemäss zumindest eine zweite Kalibriermessung mit zumindest einer weiteren, insbesondere simulierten, Distanz dadurch bereitgestellt werden, dass die Selbstkalibriereinheit ein zweites retro-reflektierendes Referenzziel aufweist, das mit der Messstrahlung anzielbar ist. Alternativ oder zusätzlich kann die Selbstkalibriereinheit erfindungsgemäss hierzu eine derart ausgebildete Positionierungseinheit aufweisen, dass die optische Baugruppe relativ zum mindestens ersten und/oder zweiten retro-reflektierenden Referenzziel definiert positionierbar ist, insbesondere definiert relativ versetzbar und/oder drehbar ist, insbesondere linear parallel zum optischen Strahlengang, und/oder dass das mindestens erste und/oder zweite retro-reflektierende Referenzziel relativ zur optischen Baugruppe definiert positionierbar ist, insbesondere linear parallel zum optischen Strahlengang versetzbar ist. Dabei unterscheidet sich die zumindest eine weitere Distanz von der simulierten (ersten) Distanz.

Durch eine derartige Vorsehung und Bereitstellung einer weiteren mit der Messstrahlung messbaren Distanz kann ein Kalibrieren des Trackers zu einem oder mehreren Zielen mit mindestens zwei unterschiedlichen Distanzen erfolgen. Die simulierten Distanzen, d.h. dann wenn die Messstrahlung durch eine optische Baugruppe verläuft, beeinflussen insbesondere die relevanten Messgrössen für die Bestimmung des zumindest einen Kalibrierparameters nicht jedoch eine allfällige Distanzmessung zum Referenzziel. Bei einer Distanzmessung würde im Wesentlichen die strukturell tatsächlich gegebene Distanz zum Ziel gemessen werden. Dadurch, dass diese Ziele sowohl mit als auch ohne das Durchlaufen der optischen Baugruppe (mit der Messstrahlung) anzielbar sind, können nicht nur Ziele mit kleinen Distanzunterschieden angezielt werden, sondern es können beispielsweise ein "nahes" Ziel ohne optische Baugruppe und ein (scheinbar) "fernes" Ziel mit Strahldurchgang durch die Baugruppe angezielt werden.

Die unterschiedlichen Distanzen für die so anzielbaren Ziele können erfindungsgemäss im Speziellen unterschiedlich
- wie nachfolgend beschrieben - erzeugt werden.

Zum einen ist die simulierte Distanz mittels Versetzen der optischen Baugruppe und/oder Versetzen des mindestens ersten oder zweiten retro-reflektierenden Referenzziels vermittels der Positionierungseinheit derart, dass der optische Strahlengang durch die optische Baugruppe verläuft und auf das mindestens erste retro-reflektierende Referenzziel trifft, erzeugbar.

Ferner ist die zumindest eine weitere Distanz mittels Versetzen der optischen Baugruppe vermittels der Positionierungseinheit aus dem optischen Strahlengang heraus derart, dass die Messstrahlung versetzt zur optischen Baugruppe verläuft, erzeugbar.

Weiters kann die zumindest eine weitere Distanz mittels linearen Verschiebens des mindestens ersten oder zweiten retro-reflektierenden Referenzziels und/oder der optischen Baugruppe erzeugt werden, wobei das Verschieben parallel zum optischen Strahlengang durchführbar ist.

In einer speziellen Ausführungsform kann der Lasertracker erfindungsgemäss eine derart ausgebildete Steuerungs- und Auswerteeinheit aufweisen, dass zur Bestimmung des zumindest einen Kalibrierparameters eine Kalibrierfunktionalität ausführbar ist. Im Rahmen der Kalibrierfunktionalität erfolgt eine Zweilagenmessung mit der simulierten und/oder mit der zumindest einen weiteren Distanz, wobei im Rahmen der Zweilagenmessung zwei Messungen in zwei Lagen bei zwei unterschiedlichen Horizontalschwenkwinkeln und bei zwei unterschiedlichen Vertikalschwenkwinkeln ausgeführt werden und für jede der zwei Messungen die Messstrahlung vermittels Ausrichten der Strahllenkeinheit relativ zur Basis auf das die simulierte und/oder die zumindest eine weitere Distanz bereitstellende Referenzziel der Selbstkalibriereinheit ausgerichtet wird, der jeweilige Horizontalschwenkwinkel und der jeweilige Vertikalschwenkwinkel bestimmt werden und jeweils die Auftreffposition der an dem jeweiligen Referenzziel reflektierten Messstrahlung auf dem photosensitiven Flächendetektor bestimmt wird. Zudem wird der zumindest eine Kalibrierparameter in Abhängigkeit von den bestimmten Horizontalschwenkwinkeln, Vertikalschwenkwinkeln und Auftreffpositionen abgeleitet. Die Zweilagenmessung repräsentiert dabei die erste Kalibriermessung.

Als Zweilagenmessung (Umschlagsmessung) werden im Zusammenhang mit vorliegender Erfindung zwei Messungen zu einem Ziel in zwei Lagen der Strahllenkeinheit verstanden, wobei die Ausrichtungen der Strahllenkeinheit für die zwei Lagen in einem definierten Ausrichtungsverhältnis zueinander stehen. Die beiden Messungen der Zweilagenmessung werden bei jeweils unterschiedlichen Horizontalschwenkwinkeln und Vertikalschwenkwinkeln ausgeführt. D.h. es wird eine erste Messung auf das Ziel in einer ersten Ausrichtung der Strahllenkeinheit und der Stütze relativ zur Basis des Trackers ausgeführt und anschliessend eine zweite Messung (mit der gleichen Distanz zum Ziel), wobei die Stütze relativ zur Basis und die Strahllenkeinheit relativ zur Stütze jeweils verschwenkt sind. Die Stütze ist dabei im Wesentlichen um 180° relativ zur Basis verschwenkt und die Strahllenkeinheit relativ zur Stütze derart, dass die Messstrahlung im Wesentlichen in die gleiche Richtung (wie für die erste Messung) emittiert wird, d.h. die Strahllenkeinheit befindet sich im Wesentlichen in einem (zweiten) Vertikalschwenkwinkel, welcher gleich dem negativen vorher anliegenden (ersten) Vertikalschwenkwinkel ist.

Insbesondere kann die Steuerungs- und Auswerteeinheit erfindungsgemäss derart ausgebildet sein, dass bei Ausführung von jeweils einer Zweilagenmessung für die simulierte und die zumindest eine weitere (insbesondere ebenfalls simulierte) Distanz im Rahmen der Kalibrierfunktionalität der Servokontrollpunkt auf dem positionssensitiven Flächendetektor zur Regelung der Ausrichtung der Messstrahlung auf das Ziel im Rahmen der Zielverfolgungsfunktionalität und der Versatz, insbesondere parallele Versatz, zwischen der durch die strukturelle Ausbildung der Strahllenkeinheit definierten Zielachse und der durch die Emission der Messstrahlung definierten Emissionsachse und der den Winkelversatz zwischen der Zielachse und der Emissionsachse angebende Zielachsenfehler als Kalibrierparameter bestimmt werden.

Somit können diese drei Abweichungen des Messstrahlverlaufs von einer Sollausrichtung für die Strahlung durch Ausführung von jeweils einer Zweilagenmessung zu zumindest zwei Referenzzielen mathematisch aus den erfassten Horizontal- und Vertikalschwenkwinkeln und den Auftreffpositionen zu den Messungen präzise berechnet bzw. abgeleitet werden. Je nach Auswertung der Messungen werden die Grössen dabei allfällig nicht unabhängig und einzeln berechnet, sondern können beispielsweise korreliert bestimmt werden. Insbesondere wird der Servokontrollpunkt korreliert mit dem Zielachsenabstand bestimmt.

Gemäss einer speziellen Ausführungsform ist im Rahmen des Ausführens der Kalibrierfunktionalität durch Anzielen zumindest des ersten retro-reflektierenden Referenzziels vermittels der optischen Baugruppe eine derartige Winkelsimulation zumindest zum ersten retro-reflektierenden Referenzziel bewirkbar, dass eine durch die Zweilagenmessung bestimmbare Differenz der Horizontalschwenkwinkel, Vertikalschwenkwinkel und der Auftreffposition so bestimmt wird, als ob das mindestens erste retro-reflektierende Referenzziel weiter entfernt wäre als das Referenzziel tatsächlich durch die strukturell gegebene Entfernung entfernt ist.

Insbesondere im Zusammenhang mit der oben beschriebenen Zweilagenmessung sind im Folgenden mögliche Messverfahren zur Bestimmung von zumindest einem Kalibrierparameter beschrieben.

Mit einer dauerhaft sehr stabilen Anordnung der optischen Baugruppe und des retro-reflektierenden Referenzziels kann mit einer einzelnen Messung in nur einer Lage der Strahllenkeinheit (und der Stütze) relativ zur Basis durch die optische Baugruppe ein Kalibrierparameter für jede Richtung (horizontal und vertikal) bestimmt werden.

Bei einer Zweilagenmessung (bestehend aus einer ersten Messung in einer ersten Lage der Strahllenkeinheit und einer zweiten Messung in einer zweiten Lage der Strahllenkeinheit) werden streng genommen zwei Messungen in einer ganz bestimmten Art und Weise (Ausrichtungsrelation der Strahllenkeinheit) ausgeführt. Damit lässt sich - bei jeweiliger Messung durch die optischen Baugruppe zum Referenzziel - auch je ein Kalibrierparameter pro Richtung bestimmen, wobei die Anforderungen an die Stabilität der Anordnung von optischer Baugruppe und Retroreflektor geringer sind als für die Ableitung des Parameters aus einer Messung in nur einer Lage.

Durch eine einzelne Messung in nur einer Lage der Strahllenkeinheit durch die optische Baugruppe und eine zweite Messung in ebenfalls nur einer Lage der Strahllenkeinheit auf ein Referenzziel in einer zweiten unterschiedlichen Distanz (z.B. bei Anzielen des Referenzziels nicht durch die optische Baugruppe) ist eine Bestimmung von je zwei Kalibrierparametern pro Richtung (horizontal und vertikal) durchführbar. Hierzu ist wiederum eine grosse Stabilität des Aufbaus vorauszusetzen. Die beiden Messungen können dabei in zwei Lagen (gemäss einer Zweilagenmessung, jedoch nicht zu einem festen Ziel in einer konstanten Distanz) ausgeführt werden.

Mit einer Zweilagenmessung bestehend aus einer ersten Messung in Lage I der Strahllenkeinheit und einer zweiten Messung in Lage II der Strahllenkeinheit durch die optische Baugruppe zum Referenzziel und einer zweite Zweilagenmessung, ebenfalls bestehend aus einer ersten Messung in Lage I und einer zweiten Messung in Lage II auf ein Ziel (evtl. ebenfalls auf das Referenzziel für die erste Zweilagenmessung) in einer zweiten unterschiedlichen Distanz, können je zwei Kalibrierparameter pro Richtung bestimmt werden, wobei die zu erfüllenden Anforderungen an die Langzeitstabilität des Aufbaus geringer sind. Bei diesem Verfahren werden im Prinzip vier Einzelmessungen durchgeführt, wobei zwei dieser Einzelmessungen paarweise immer derart ausgeführt werden, dass sich daraus zwei Zweilagenmessungen ergeben.

Gemäss einer weiteren Ausführungsform des erfindungsgemässen Lasertrackers weist die Selbstkalibriereinheit eine Strahlführungseinheit zur Definition des optischen Strahlengangs und zur Führung der Messstrahlung zum mindestens ersten und/oder zweiten retro-reflektierenden Referenzziel auf, insbesondere wobei die Strahlführungseinheit derart ausgebildet ist, dass die Messstrahlung vermittels der Strahlführungseinheit umlenkbar ist, insbesondere mittels eines Spiegels.

Die Erfindung betrifft weiters ein Kalibrierverfahren für einen Lasertracker, der ausgebildet ist zur Positionsbestimmung eines Ziels sowie insbesondere zur fortlaufenden Verfolgung des Ziels und aufweist ein Strahlquelle zur Erzeugung von Messstrahlung, eine eine Stehachse definierende Basis und eine Stütze, die eine im Wesentlichen orthogonal zur Stehachse stehenden Kippachse definiert, wobei die Stütze relativ zur Basis um die Stehachse motorisiert schwenkbar ist und ein Horizontalschwenkwinkel durch eine Ausrichtung der Stütze relativ zur Basis definiert wird. Ferner weist der Tracker eine um die Kippachse relativ zur Stütze motorisiert schwenkbare Strahllenkeinheit auf, wobei ein Vertikalschwenkwinkel durch eine Ausrichtung der Strahllenkeinheit relativ zur Stütze definiert wird, zur Emission und Ausrichtung der Messstrahlung und zum Empfang von zumindest einem Teil der am Ziel reflektierten Messstrahlung, und weist einen photosensitiven Flächendetektor zur Detektion einer Auftreffposition der reflektierten Messstrahlung auf dem Flächendetektor und zur Erzeugung eines Ausgangssignals zur Steuerung einer Zielverfolgungsfunktionalität auf. Im Rahmen des Kalibrierverfahrens erfolgen ein Ausführen von zumindest einer Kalibiermessung zu mindestens einem ersten retro-reflektierenden Referenzziel mit einem Bestimmen des Horizontalschwenkwinkels, des Vertikalschwenkwinkels und der Auftreffposition der an dem mindestens ersten retro-reflektierenden Referenzziel reflektierten Messstrahlung auf dem photosensitiven Flächendetektor und ein Ableiten von zumindest einem Kalibrierparameter bezüglich einer Position und/oder Richtung der Messstrahlung in Abhängigkeit von dem bestimmen Horizontalschwenkwinkel, dem bestimmen Vertikalschwenkwinkel und der bestimmen Auftreffposition.

Erfindungsgemäss wird beim Ausführen der zumindest einen Kalibriermessung das mindestens erste retro-reflektierende Referenzziel derart angezielt, dass ein optischer Strahlengang der Messstrahlung durch eine verkleinernd wirkende optische Baugruppe verläuft und die Messstrahlung auf das mindestens erste retro-reflektierende Referenzziel trifft, sodass die Kalibriermessung mit einer hinsichtlich relevanter Messgrössen für die Bestimmung des zumindest einen Kalibrierparameters simulierten Distanz erfolgt, wobei die simulierte Distanz zu dem mindestens ersten retro-reflektierenden Referenzziel grösser ist als eine tatsächlich strukturell gegebene Entfernung zu dem mindestens ersten retro-reflektierenden Referenzziel, insbesondere wobei die relevanten Messgrössen repräsentiert sind durch den Horizontalschwenkwinkel, den Vertikalschwenkwinkel und/oder die Auftreffposition auf dem photosensitiven Flächendetektor. Diese simulierte Distanz nimmt im Wesentlichen Einfluss auf, wie oben erwähnt, die relevanten Messgrössen (insbesondere Horizontalschwenkwinkel, Vertikalschwenkwinkel und Auftreffposition) und nicht auch auf eine tatsächlich messbare Distanz, d.h. hinsichtlich einer relevanten Winkelmessung erscheint das Ziel weiter entfernt als es tatsächlich strukturell angeordnet ist, bei einer Distanzmessung würde hingegen im Wesentlich die tatsächliche strukturelle Distanz gemessen werden.

Insbesondere wird für das Kalibrierverfahren erfindungsgemäss zumindest eine weitere Distanz, insbesondere simulierte Distanz, bereitgestellt durch ein Anzielen eines zweiten retro-reflektierenden Referenzziels. Ferner kann die zumindest eine weitere Distanz durch ein Versetzen der optischen Baugruppe relativ zum mindestens ersten und/oder zweiten retro-reflektierenden Referenzziel erzeugt werden.

Gemäss einer spezifischen Ausführung können erfindungsgemäss für die simulierte und/oder für die zumindest eine weitere (insbesondere ebenfalls simulierte) Distanz mindestens zwei Kalibiermessungen, insbesondere jeweils zwei Kalibiermessungen, bei zwei unterschiedlichen Horizontalschwenkwinkeln und bei zwei unterschiedlichen Vertikalschwenkwinkeln ausgeführt werden. Für jede Kalibiermessung werden dabei die Messstrahlung vermittels Ausrichten der Strahllenkeinheit relativ zur Basis auf das mindestens erste und/oder zweite retro-reflektierende Referenzziel ausgerichtet, der jeweilige Horizontalschwenkwinkel und der jeweilige Vertikalschwenkwinkel bestimmt und jeweils die Auftreffposition auf dem photosensitiven Flächendetektor bestimmt. Der zumindest eine Kalibrierparameter wird dann in Abhängigkeit von den Horizontalschwenkwinkeln, den Vertikalschwenkwinkeln und den Auftreffpositionen abgeleitet.

Als Kalibrierparameter können dabei erfindungsgemäss insbesondere ein Servokontrollpunkt auf dem positionssensitiven Flächendetektor zur Regelung einer Ausrichtung der Messstrahlung auf das Ziel und ein Versatz, insbesondere paralleler Versatz, zwischen einer durch die strukturelle Ausbildung der Strahllenkeinheit definierten Zielachse und einer durch die Emission der Messstrahlung definierten Emissionsachse und ein einen Winkelversatz zwischen der Zielachse und der Emissionsachse angebender Zielachsenfehler bestimmt werden.

Erfindungsgemäss kann das Kalibrierverfahren automatisiert ausgeführt werden, beispielsweise nachdem ein Startsignal für die Ausführung gegeben wurde.

In einer speziellen Ausführung der Erfindung kann ein Lasertracker erfindungsgemässe derart ausgebildet sein, dass damit ein oben beschriebenes erfindungsgemässes Kalibrierverfahren ausführbar ist, insbesondere wobei eine Steuerungs- und Auswerteeinheit des Lasertrackers zur Ausführung des erfindungsgemässen Kalibrierverfahrens ausgebildet ist.

Ein weiterer Aspekt der Erfindung betrifft ein Computerprogrammprodukt, das auf einem maschinenlesbaren Träger gespeichert ist, zur Steuerung des Ausführens der zumindest einen Kalibriermessung für zumindest eine simulierte Distanz und zur Ausführung des Ableitens des zumindest einen Kalibrierparameters eines erfindungsgemässen Kalibrierverfahrens, insbesondere wenn das Computerprogrammprodukt auf einem erfindungsgemässen Lasertracker, insbesondere auf einer Steuerungs- und Auswerteeinheit des Lasertrackers, ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: einen Aufbau für eine konventionelle, bekannte Kalibrierung eines Lasertrackers mit zwei separaten retro-reflektierenden Zielen;
- Fig.2: zwei Ausführungsformen für erfindungsgemässe Lasertracker und ein Messhilfsinstrument;
- Fig.3: eine Strahllenkeinheit eines erfindungsgemässen Lasertrackers und einen Retroreflektor;
- Fig.4: das Prinzip einer erfindungsgemässen Distanzsimulation mit einer Selbstkalibriereinheit mit einer optischen Baugruppe und einem retro-reflektierenden Referenzziel;
- Fig.5: eine erste Ausführungsform einer erfindungsgemässen Selbstkalibriereinheit mit einer als (umgekehrter) Strahlaufweiter mit zwei optisch diffraktiven Elementen ausgeführten optischen Baugruppe;
- Fig.6a-d: jeweils eine erfindungsgemässe Ausführungsform für eine Selbstkalibriereinheit bzw. für eine erfindungsgemässe Anordnung von optischer Baugruppe und Referenzziel zur Simulation einer optischen Distanz zum Referenzziel; und
- Fig.7a-b: jeweils ein Ausführungsbeispiel für einen erfindungsgemässen Lasertracker mit einer Strahllenkeinheit und einer in der Basis des Trackers integrierten Selbstkalibriereinheit.

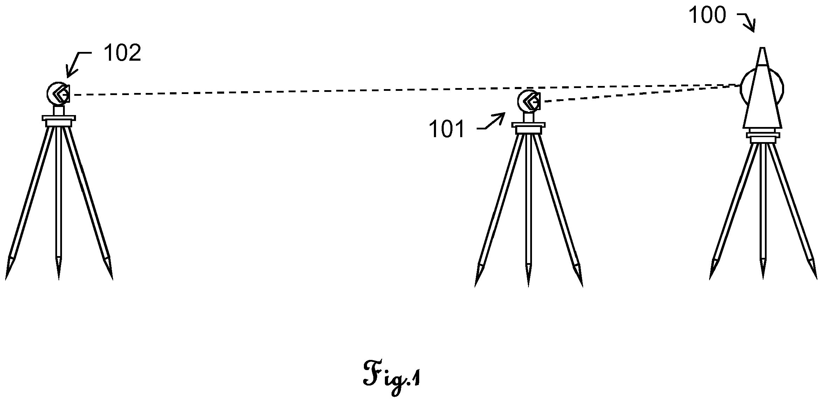

Fig.1 zeigt einen Aufbau für eine konventionelle, bekannte Kalibrierung eines Lasertrackers 100 mit zwei separaten retro-reflektierenden Zielen 101,102.

Zur Gewährleistung einer geforderten Genauigkeit für Messungen mit einem Lasertracker 100 muss im Allgemeinen eine Kalibrierung verschiedener, messbeeinflussender Grössen bereitgestellt werden. Hierzu zählen insbesondere:
- PSD-Offset (der Abstand zwischen einem elektrischen Nullpunkt eines für das Tracking vorgesehenen positionssensitiven Flächensensors und dem Servokontrollpunkt, der eine exakte Ausrichtung in x-bzw. y-Richtung der Messstrahlung auf das Zentrum eines retro-reflektierenden Ziels repräsentiert und von dort reflektiert auf diesem Sensorpunkt auftrifft),
- Zielachsenabstand (Abstand einer durch eine Emissionsrichtung der Messachse definierte Emissionsachse zu einer strukturell durch die Ausgestaltung einer Strahllenkeinheit gegebene Zielachse bzw. zu einer Kippachse, die durch die Stütze definiert ist) und
- Zielachsenfehler (= Richtungsfehler: Abweichungen von einer Parallelität zwischen Emissionsachse und Zielachse).

Zumindest diese oben genannten drei Parameter können zuverlässig dadurch bestimmt werden, dass mehrere Zweilagenmessungen mit deutlichen Distanzunterschieden zu den Zielen 101,102 durchgeführt werden.

Typischerweise wird hierfür eine erste Messung mit einer ersten bestimmten Ausrichtung der Strahllenkeinheit auf ein Ziel 101,102 ausgeführt. Für die zweite Messung (zweite Lage) wird die Stütze im Wesentlichen um 180° relativ zur Basis und die Strahllenkeinheit derart verschwenkt, dass die Messstrahlung auch in dieser Ausrichtung der Stütze auf das Ziel 101,102 trifft, d.h. die Strahllenkeinheit befindet sich im Wesentlichen im Negativen des vorher anliegenden Vertikalschwenkwinkels.

Gemäss der gezeigten Ausführung der Kalibrierung werden zwei separate Reflektoren 101,102 eingesetzt, jedoch kann in der Praxis alternativ auch nur ein einzelner Reflektor hierfür verwendet werden und hinsichtlich der erzeugbaren Distanz zum Tracker 100 verschoben werden. Dieses Vorgehen erlaubt zudem mehr als die für das Bestimmen der Parameter mit mathematischer Eindeutigkeit benötigten zwei Beobachtungen zu verwenden (Fehlererkennung und Genauigkeitssteigerung durch Überbestimmung).

Für die für die hier gezeigte Kalibriermethode mindestens vier auszuführenden Messungen werden jeweils ein Auftreffpunkt auf dem Flächensensor des Trackers 100 und die Horizontalschwenkwinkel und Vertikalschwenkwinkel bestimmt. Aus einer Zusammenschau dieser Messgrössen werden in Folge die Kalibrierparameter bestimmt. Hierbei können die Parameter jeweils einzeln unabhängig bestimmt werden oder es kann zumindest eine Parametergrösse bestimmt werden, die eine Wechselwirkung bzw. ein Zusammenspiel (gegenseitig korreliert) von zumindest zwei der Parameter angibt.

Mathematisch stellt eine Korrelation zwischen PSD-Offset und Zielachsenabstand kein Problem dar, da sich beide Grössen durch einen gemeinsamen Kalibrierwert ersetzen lassen. Solange PSD-Offset und Zielachsenabstand klein genug sind, bleibt zudem die Strahlüberdeckung zwischen ausgehenden und zurückkommenden Strahl am Interferometer (IFM) und Absolutdistanzmesser (ADM) für zuverlässige Messungen ausreichend gut.

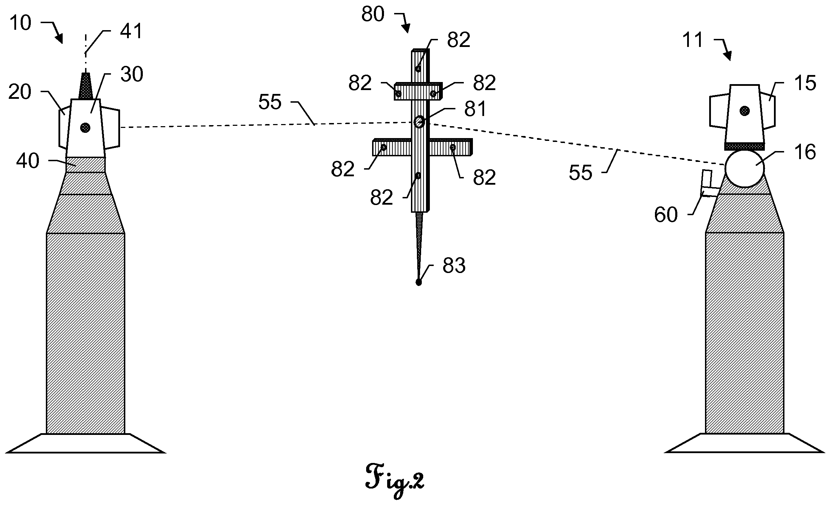

Fig.2 zeigt zwei Ausführungsformen für erfindungsgemässe Lasertracker 10,11 und ein Messhilfsinstrument 80 (taktiles Messgerät). Der erste Lasertracker 10 weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 (Strahllenkeinheit) derart an der Stütze 30 angeordnet, dass die Strahllenkeinheit 20 relativ zur Stütze 30 um eine Neigungsachse (Transitachse) schwenkbar ist. Durch eine so um zwei Achsen bereitgestellte Ausrichtungsmöglichkeit der Strahllenkeinheit 20 kann ein von dieser Einheit 20 emittierter Laserstrahl 55 (Messstrahlung) exakt ausgerichtet und damit Ziele angezielt werden. Dieses Ausrichten kann mittels einer Motorisierung automatisch erfolgen. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Messlaserstrahl 55 auf einen Reflektor 81 (Retroreflektor) am Messhilfsinstrument 80 gerichtet und wird an diesem zurück zum Lasertracker 10 retro-reflektiert. Mittels dieses Messlaserstrahls 55 kann eine Entfernung zum Reflektor 81, insbesondere mittels Laufzeitmessung, mittels des Phasenmessprinzips oder mittels des Fizeau-Prinzips, bestimmt werden. Der Lasertracker 10 verfügt hierzu über eine Entfernungsmesseinheit (mit Interferometer und Absolutdistanzmesser) zur Bestimmung dieser Entfernung zwischen dem Tracker 10 und dem Reflektor 81 und über Winkelmesser, die eine Stellung der Anzieleinheit 20, mittels derer der Laserstrahl 55 definiert ausgerichtet und geführt werden kann, und somit eine Ausbreitungsrichtung des Laserstrahls 55 bestimmbar machen. Mit anderen Worten: durch die oben beschriebene gegebene Bestimmbarkeit der Entfernung mittels der Messstrahlung ist eine Entfernungsmessfunktionalität des Lasertrackers und durch die Bestimmbarkeit der Winkelstellung der Anzieleinheit eine entsprechende Winkelmessfunktionalität des Lasertrackers bereitgestellt.

Ausserdem weist der Lasertracker 10, insbesondere die Strahllenkeinheit 20, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 80 einen taktilen Sensor auf, dessen Kontaktpunkt 83 mit einem zu vermessenden Zielobjekt in Kontakt gebracht werden kann. Während dieser Kontakt zwischen dem Tastwerkzeug 80 und dem Zielobjekt besteht können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Reflektor 81 und zu am Messhilfsinstrument 80 angeordneten Orientierungsmarkierungen 82, die beispielsweise als Leuchtdioden ausgebildet sein können. Alternativ können die Orientierungsmarkierungen 82 auch derart ausgebildet sein, dass diese bei einem Beleuchten, z.B. mit Strahlung einer definierten Wellenlänge, die auftreffende Strahlung reflektieren (z.B. als Retroreflektoren ausgebildete Orientierungsmarkierungen 82), insbesondere eine bestimmte Leuchtcharakteristik zeigen, oder dass diese ein definiertes Muster oder Farbkodierung aufweisen. Aus der Lage bzw. Verteilung der Orientierungsmarkierungen 82 in einem mit dem Sensor der Bilderfassungseinheit erfassten Bild kann somit eine Orientierung des Tastwerkzeugs 80 bestimmt werden.

Der zweite Lasertracker 11 weist eine von der Bilderfassungseinheit 15 separierte Strahllenkeinheit 16 zur Emission eines zweiten Laserstrahls 55 auf, welcher ebenfalls auf den Reflektor 81 ausgerichtet ist. Sowohl der Laserstrahl 55 als auch die Bilderfassungseinheit 15 sind jeweils um zwei Achsen motorisiert schwenkbar (um jeweils eine Kippachse und eine gemeinsame Stehachse, welche durch die Struktur eine Basis und einer jeweiligen Stütze definiert werden) und können dadurch derart ausgerichtet werden, dass mittels der Bilderfassungseinheit 15 das mit dem Laserstrahl 55 angezielte Ziel 81 und die Orientierungsmarkierungen 82 des Messhilfsinstruments 80 erfasst werden können. Somit können auch hier eine präzise Entfernung zum Reflektor 81 und eine Orientierung des Instruments 80 anhand der räumlichen Lage der Orientierungsmarkierungen 82 bestimmt werden.

Zur jeweiligen Ausrichtung der Laserstrahlen 55 auf den Reflektor 81 sind an den Lasertrackern 10,11 jeweils Beleuchtungsmittel zur Beleuchtung des Reflektors 81 mit Strahlung einer bestimmten Wellenlänge, insbesondere im infraroten Wellenlängenbereich, vorgesehen und zusätzliche zumindest eine Zielsuchkamera mit einem positionssensitiven Detektor, eine so genannte ATR-Kamera (automatic target recognition), an jedem Tracker 10,11 angeordnet. Die an dem Reflektor 81 reflektierte und zum Lasertracker 10, 11 rückgestrahlte Beleuchtungsstrahlung kann jeweils mittels der Kamera detektiert und mit den positionssensitiven Detektoren kann eine Position des Reflektors 81 auf dem jeweiligen Detektor abgebildet werden. Somit kann sowohl mit dem ersten Lasertracker 10 als auch mit dem zweiten Lasertracker 11 eine abgebildete Position des Reflektors bestimmt und in Abhängigkeit dieser detektierten Suchbildpositionen das Ziel (Reflektor 81) im Bild aufgefunden und die Anzieleinheit 20 bzw. die Strahlführungseinheit 16 (Strahllenkeinheit) derart ausgerichtet werden, dass das Ziel mit dem Messstrahl 55 automatisch angezielt wird bzw. der Laserstrahl 55 dem Ziel 81 automatisch (iterativ) angenähert wird. Für eine robuste Detektion der Reflexe können insbesondere Filter in der Zielsuchkamera verbaut sein (z.B. wellenlängenabhängige Filter), welche z.B. nur das von den Beleuchtungsmitteln emittierte Licht transmittieren, und/oder Schwellwerte für einen Vergleich der erfassten Signale mit Signalsollwerten im Lasertracker hinterlegt sein.

Zudem können die erfindungsgemässen Lasertracker 10,11 jeweils eine Übersichtskamera aufweisen, deren Sichtfeld - im Vergleich zu den Sichtfeldern der Zielsuchkameras mit positionssensitiven Detektoren - grösser ist und somit einen grösserer Bereich erfassbar macht. Mit diesen Übersichtskameras können Bilder von Objekten und Zielen im visuellen Lichtspektrum erfasst werden, wobei diese Bilder mittels einer Anzeigeeinheit an den Lasertrackern und/oder auf einem Display, welches an einer jeweiligen Steuerungseinheit zur Steuerung des jeweiligen Lasertrackers 10,11 angeordnet ist, ausgegeben werden können. Im Speziellen können mit der Übersichtskamera Farbbilder erfasst werden.

Die Beleuchtungsmittel, die Zielsuchkameras und/oder die Übersichtskamera können in diesem Zusammenhang z.B. an der Bilderfassungseinheit 15, der Strahlführungseinheit 16, der Anzieleinheit 20 (Strahllenkeinheit), der Stütze 30 und/oder der Basis 40 in jeweils definierten Positionen angeordnet sein.

Die Entfernungsmesseinheit des jeweiligen Lasertrackers 10,11 stellt eine Entfernungsinformation zum Ziel 81 auf Basis einer Bestimmung einer relativen oder absoluten Distanz zwischen dem jeweiligen Tracker 10,11 und dem Ziel 81 und einer Bestimmung einer Änderung dieser Distanz bereit (d.h. es ist eine Entfernungsmessfunktionalität des Lasertrackers, also eine Funktionalität zur Messung der Entfernung, gegeben). Wird dabei die absolute Distanz insbesondere mittels Laufzeitmessung, mittels des Phasenmessprinzips oder mittels des Fizeau-Prinzips bestimmt, so wird zur Bestimmung der Distanzänderung eine Messung mit einem der jeweiligen Entfernungsmesseinheit zugeordneten Interferometer durchgeführt. Hierzu ist an jedem der Lasertracker 10,11 eine Strahlquelle zur Erzeugung einer Laserstrahlung vorgesehen, wobei die erzeugte Strahlung zumindest in eine Referenzstrahlung und eine Messstrahlung 55 aufgeteilt wird. Die Referenzstrahlung wird entlang eines bekannten Referenzpfades (Länge des Pfades ist bekannt) zu einem Interferometerdetektor geführt. In einer alternativen Ausführungsform kann die Länge des Referenzpfades zumindest konstant sein, wobei die Länge des Pfades nicht bekannt sein muss. In Abhängigkeit der Anordnung und Ausgestaltung der optischen Komponenten (z.B. Detektor) kann die Länge des Referenzpfades insbesondere "Null" sein. Die Messstrahlung 55 hingegen wird derart aus dem Tracker 10,11 ausgesendet, dass diese auf das Ziel 81 trifft und an diesem rückreflektiert wird. Der reflektierte Strahl bzw. Teile des reflektierten Strahls werden dann wiederum seitens des Trackers 10,11 erfasst und entlang eines Messpfades ebenfalls zum Interferometerdetektor geführt, wo die Referenzstrahlung mit der empfangenen Messstrahlung 55 überlagert wird. Durch diese Überlagerung entsteht eine Interferenz aus den beiden Strahlungen, welche am Detektor erfasst und aufgelöst werden kann.

Durch diese Interferenz werden Maxima (konstruktive Interferenz) und Minima (destruktive Interferenz) an Strahlungsintensität erzeugt. Die Intensität ist dabei abhängig von einem Strahlengangunterschied zwischen den beiden auf dem Detektor auftreffenden Strahlen. Da der Referenzpfad und damit die Distanz, die von der Referenzstrahlung zum Detektor zurückgelegt wird, konstant gehalten werden kann, ist der Gangunterschied im Wesentlichen von der Entfernung zwischen dem jeweiligen Lasertracker 10,11 und dem Ziel 81 abhängig. Wird demnach die Entfernung zwischen dem Tracker 10, 11 und dem Ziel 81 verändert, so verändert sich auch der Gangunterschied und damit während der Entfernungsveränderung auch die Intensität eines detektierten Interferenzzustands als Interferometerausgangsgrösse (Interferenzmusters).

Während einer solchen Relativbewegung (wobei die Entfernung verändert wird) zwischen zumindest einem der Lasertracker 10,11 und dem Ziel 81 können am Interferometerdetektor abwechselnd hohe und niedrige Intensitäten festgestellt werden. Unter Berücksichtigung der Wellenlänge der Messstrahlung 55 (und der Referenzstrahlung) kann aus einer fortlaufenden Detektion des Interferenzzustands als Interferometerausgangsgrösse eine relative Distanz, d.h. eine Änderung der Distanz, zum Ziel 81 berechnet werden. Dabei werden insbesondere fortlaufend die detektierten Intensitätsmaxima und/oder Intensitätsminima (als Interferometerpulse) gezählt.

Erfindungsgemäss ist in die Basis 40 des Lasertrackers 10 eine erfindungsgemässe Selbstkalibriereinheit (nicht gezeigt) integriert, die mit der Messstrahlung 55 (durch Anzielen mit der Strahllenkeinheit 20) anzielbar ist und die mindestens ein retro-reflektierendes Referenzziel und eine optische Baugruppe zur Bereitstellung einer simulierten Distanz zu diesem Referenzziel aufweist, wobei das Referenzziel bei Anzielen durch die optische Baugruppe (für die Bestimmung von Horizontal-, Vertikalschwenkwinkel und/oder Auftreffposition) in einer grösseren Entfernung erscheint, als die reale, strukturelle Entfernung zum Ziel ist. Dadurch kann eine Kalibrierung des Trackers 10 durch ein Bestimmen einer Ausrichtung der Strahllenkeinheit 20 relativ zur Basis 40 und einer Auftreffposition auf der der Strahllenkeinheit zugeordneten PSD für Messungen bei Anzielen des zumindest einen Reflektors (insbesondere für unterschiedliche (simulierte) Distanzen, die durch die Selbstkalibriereinheit bereitstellbar sind) erfolgen.

Ebenso ist an dem Lasertracker 11 eine erfindungsgemässe mit der Messstrahlung 55 vermittels der Strahlführungseinheit 16 anzielbare Selbstkalibriereinheit 60 angeordnet. Eine Kalibrierung des Trackers 11 kann somit mittels Anzielen der Selbstkalibriereinheit 60 erfolgen, wobei diese Einheit 60 mindestens einen Retroreflektor und eine optische Baugruppe, die wie ein Verkleinerungsobjektiv wirkt, aufweist. Bei dem Anzielen bzw. mehrfachen Anzielen können durch die Selbstkalibriereinheit 60 unterschiedliche Distanzen für die Bestimmung der relevanten Messgrössen zu dem mindestens einen Retroreflektor mittels eines optischen Abbildungsmassstabes (durch die optische Baugruppe) erzeugt bzw. direkt bereitgestellt werden.

Die Position (und Orientierung) der Selbstkalibriereinheit an dem jeweiligen Tracker 10,11 ist bekannt, sodass beispielsweise eine Entfernung von der jeweiligen Strahllenkeinheit 16,20 zur jeweiligen Selbstkalibriereinheit bzw. zum jeweiligen mindestens einen Reflektor gegeben ist. Ausserdem ist die positionelle Anordnung der optischen Baugruppen und des Retroreflektors bezüglich der Selbstkalibriereinheiten bekannt, sodass die simulierte Distanz ebenfalls bekannt ist (durch den Abbildungsfaktor der optischen Baugruppe und durch den tatsächlichen Abstand zwischen Baugruppe und Retroreflektor).

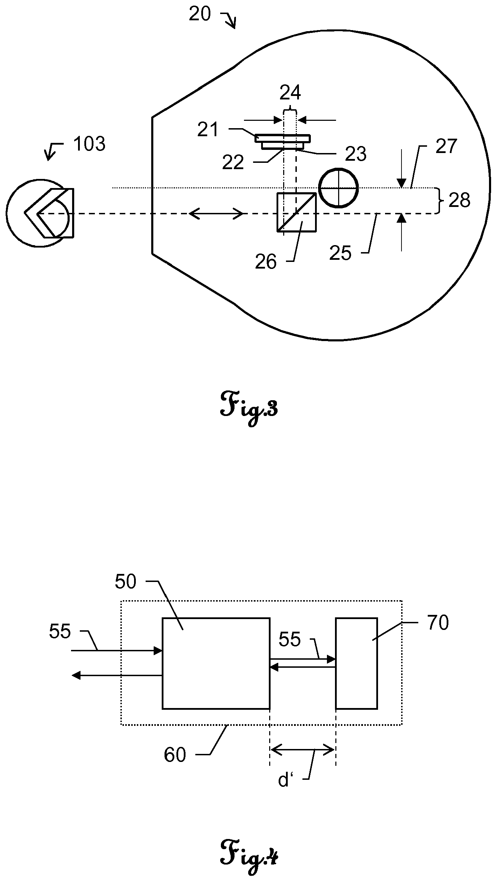

Fig.3 zeigt eine Strahllenkeinheit 20 eines erfindungsgemässen Lasertrackers und einen Retroreflektor 103. In der gezeigten Ausführungsform ist ein photosensitiver Flächendetektor 21 (PSD) in die Strahllenkeinheit 20 integriert und wird bei einer Ausrichtung der Messstrahlung mitverschwenkt. Zur Erzeugung der Messstrahlung kann beispielsweise eine Laserdiode oder ein Gaslaser (z.B. HeNe-Laser) vorgesehen sein, wobei die Strahlquelle ebenfalls der Strahllenkeinheit 20 oder einem anderen Teil des Trackers, z.B. in der Basis oder der Stütze, zugeordnet ist.

Die Messstrahlung ist entlang der Emissionsachse 25 emittierbar und derart auf den Retroreflektor 103 ausrichtbar, dass der Reflektor 103 in dessen Zentrum getroffen wird und die Strahlung von dort retro-reflektiert wird. Der am Ziel 103 reflektierte Strahl wird mittels eines Strahlumlenkelements 26, z.B. einem Strahlteiler, auf die PSD 21 gelenkt und trifft dort an einer durch die Ausgestaltung der PSD 21 bestimmbaren Position auf. In der gezeigten Ausrichtung trifft der Strahl auf dem Servokontrollpunkt 23 auf, da die Strahllenkeinheit 20 perfekt auf den Reflektor 103 (auf dessen Zentrum) eingeregelt ist.

Der Servokontrollpunkt 23 repräsentiert eine bestimmte Position auf der PSD 21, welche zur automatischen Anzielung und Verfolgung eines Ziels 103 dient. Wird der am Ziel 103 reflektierte Messstrahl an diesem Ort detektiert, so ist der Strahl auf das Zentrum des Reflektors 103 ausgerichtet. Weicht die Auftreffposition auf der PSD 21 von dem Servokontrollpunkt 23 ab so kann in Abhängigkeit von dieser Abweichung eine (Neu-)Ausrichtung der Messstrahlung derart gesteuert erfolgen, dass der Strahl auf das Zentrum des Reflektors 103 trifft.

Der Servokontrollpunkt 23 muss hierfür nicht mit dem elektrischen Nullpunkt 22 des Flächendetektors 21 übereinstimmen muss jedoch, um präzise Messungen mit dem Tracker zu gewährleisten, kalibriert werden bzw. sein. Der Versatz 24 zwischen dem elektrischen Nullpunkt 22 und dem Servokontrollpunkt 23 wird auch PSD-Offset 24 genannt und gibt eine relative Positionierung der beiden Punkte 22,23 an.

Ein weiterer zu kalibrierender Versatz 28 (Zielachsenabstand) entsteht dadurch, dass die Messstrahlung entlang der Emissionsachse 25 emittiert wird, wobei die Emissionsachse 25 nicht koaxial zu einer durch die strukturelle Ausbildung der Strahllenkeinheit 20 vorgegebene Zielachse 27 verläuft. Die Zielachse 27 schneidet gemäss der hier gezeigten Ausführungsform eine durch die Stütze des Lasertrackers definierte Kippachse, um die die Strahllenkeinheit 20 motorisiert rotierbar ist. Zudem schneidet die Zielachse 27 hier die durch die Basis des Trackers definierte Stehachse, um die die Stütze schwenkbar ist. Insbesondere ergibt sich ein gemeinsamer Schnittpunkt für Stehachse, Kippachse und Zielachse 27 wobei der Versatz (geringster Abstand) der Emissionsachse 25 zu diesem Schnittpunkt den Zielachsenabstand 28 bildet.

Des Weiteren kann ein Zielachsenfehler durch einen Richtungsfehler zwischen Zielachse 27 und Emissionsachse 25 vorliegen (hier nicht gezeigt), d.h. die Emissionsachse 25 verläuft nicht nur nicht koaxial sondern zudem nicht parallel zur Zielachse 27.

Ein präzises Anzielen eines Reflektors 103 wird dadurch bereitgestellt, dass diese drei Abweichungen bekannt und im System kalibriert sind bzw. zumindest in bestimmten Intervallen (z.B. bei jeder Inbetriebnahme des Trackers) kalibriert werden. Erfindungsgemäss kann dieses Kalibrieren - im Gegensatz zu einem konventionellen Kalibriervorgang gemäss Fig.1 - automatisch, d.h. ohne Eingriff eines Benutzers, und ohne zusätzliche, von Tracker separierte Ziele 103 erfolgen.

Hierfür ist erfindungsgemäss zumindest ein retro-reflektierendes Referenzziel 70 mit der Basis des Trackers kombiniert und es wird eine simulierte Distanz zu dem Ziel 70 (durch Verwendung der optischen Baugruppe) erzeugt, die für Bestimmung der relevanten Messgrössen grösser erscheint als eine strukturell vorgegebene Distanz zu dem Ziel 70. In Fig.4 wird das Prinzip dieser erfindungsgemässen Distanzsimulation allgemein gezeigt. Hierbei ist eine Selbstkalibriereinheit 60 mit einer optischen Baugruppe 50 und einem retro-reflektierenden Referenzziel 70 vorgesehen.

Zur Kalibrierung eines Lasertrackers mit dieser Selbstkalibriereinheit 60 wird die Messstrahlung 55 derart auf die Selbstkalibriereinheit 60 ausgerichtet, dass der optische Strahlengang der Messstrahlung 55 durch die optische Baugruppe 50 verläuft und diese an dem Referenzziel 70 retro-reflektiert wird. Aufgrund der strukturellen Anordnung der Bauteile ist ein Abstand d' zwischen der optischen Baugruppe 50 und dem Referenzziel 70 gegeben.

Die optische Baugruppe ist so ausgestaltet, dass die Messstrahlung beim Durchlaufen dieser Baugruppe 50 derart beeinflusst wird, insbesondere durch eine Richtungsveränderung der Messstrahlung, dass das Referenzziel 70 hinsichtlich der relevanten Messgrössen für die Bestimmung des zumindest einen Kalibrierparameters in einer Distanz unterschiedlich zur realen Distanz d' erscheint. Mittel der optischen Baugruppe 50 wird somit ein Faktor F in das System eingeführt, der ein bestimmtes optisches Abbildungsverhältnis des Referenzziels 70 gegenüber der Strahllenkeinheit des Trackers bereitstellt.

Zur Bestimmung der durch diese Anordnung simulierten (optischen) Distanz D zum Referenzziel wird der Faktor F mit dem realen Abstand d' multipliziert und eine Distanz zwischen der optischen Baugruppe 50 und einer Instrumentenachse des Trackers addiert (z.B. Strecke zwischen der optischen Baugruppe 50 und Entfernungsmesser).

Er versteht sich, dass im Rahmen der Konstruktion einer optischen Baugruppe 50 generell strahlbeeinflussende Elemente jeglicher Art einsetzbar sind, mit welchen Distanzen erfindungsgemäss "simulierbar" sind, wobei die Distanzen signifikant unterschiedlich zu deren realen Abständen sind, wie z.B. optische Gitter, Spiegel, Flüssigkeiten etc.

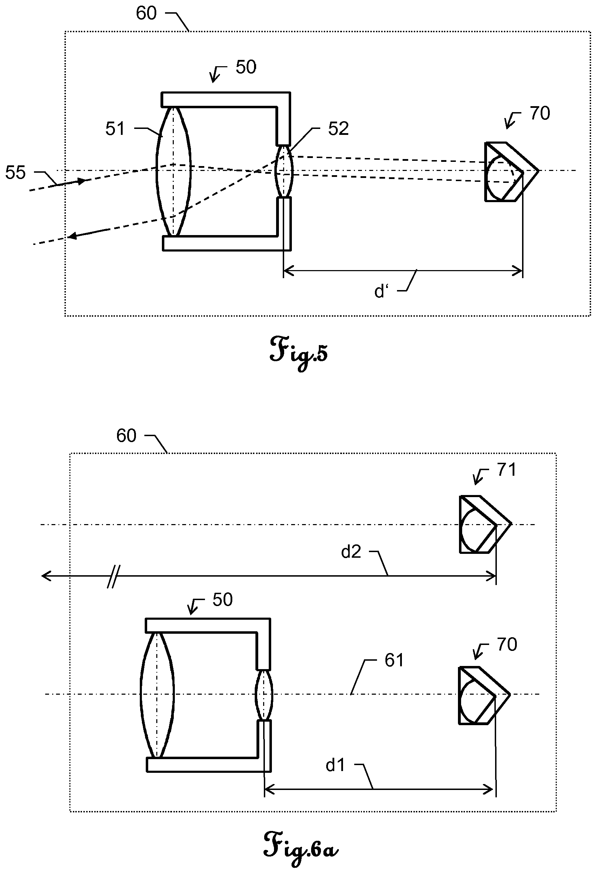

Eine erste erfindungsgemässe Ausführungsform zur Simulation der Distanz ist in Fig.5 gezeigt. Die optische Baugruppe 50 der Selbstkalibriereinheit 60 ist dabei ausgeführt als (umgekehrter) Strahlaufweiter mit zwei optisch diffraktiven Elementen 51,52, z.B. Linsen, wodurch eine Veränderung des Strahlverlaufs der eintretenden Messstrahlung 55 erreicht wird. Der Strahlaufweiter 50 wirkt hierbei als Verkleinerungsobjektiv und lässt das als Retroreflektor ausgebildete Referenzziel 70 weiter entfernt von der Baugruppe 50 erscheinen als der tatsächliche Abstand d' ist.

Die am Reflektor 70 reflektierte Messstrahlung 55 wird nach erneutem Durchlauf des umgekehrten Strahlaufweiters 50 parallel versetzt zur eintretenden Strahlung ausgestrahlt. Trifft die Messstrahlung 55 zentral auf den Reflektor 70 so wird die reflektierte Strahlung koaxial zur eintretenden Strahlung rückgestrahlt.

Durch eine derartige Anordnung kann somit innerhalb eines vergleichsweise begrenzten Bauraums eine simulierte Distanz zu einem Reflektor 70 erzeugt werden, welche um ein Vielfaches grösser ist als der reale durch die Anordnung des Reflektors vorgegebene Abstand d'.

Der durch die diffraktiven Elemente 51,52 definierte Vergrösserungsfaktor des umgekehrten Strahlaufweiters 50 gibt dabei vor, um wie viel eine reale Distanz d' optische verkürzbar ist. Dieser Vergrösserungsfaktor geht quadratisch in eine Berechnung der simulierten Distanz ein: Verkürzungsfaktor = Vergrösserungsfaktor².

Dies bedeutet, dass der reale Abstand d' einer um eine Multiplikation mit dem Vergrösserungsfaktor² längeren simulierten Distanz D entspricht. Bei einem umgekehrten Strahlaufweiter mit einem Vergrösserungsfaktor 10 würde z.B. ein realer Abstand des Retroreflektors 70 von 100mm genügen, um damit eine simulierte Distanz D von 10m zu erzeugen.

Die Figuren 6a-d zeigen jeweils eine Ausführungsform für eine erfindungsgemässe Selbstkalibriereinheit 60 bzw. für eine erfindungsgemässe Anordnung von optischer Baugruppe 50 und Referenzziel 70 zur Bereitstellung einer simulierten Distanz D zum Referenzziel 70.

Fig.6a zeigt eine erfindungsgemässe Selbstkalibriereinheit 60 mit zwei Referenzzielen 70,71 und einer als umgekehrter Strahlaufweiter ausgebildeten optischen Baugruppe 50, wobei die Baugruppe 50 und eines der Referenzziele 70 so angeordnet sind, dass dieses Ziel 70 mit einem Durchtritt der einfallenden Messstrahlung durch die optische Baugruppe 50 anzielbar ist (hier: gemeinsame optische Achse 61). Somit wird bei Anzielen des ersten Referenzziels 70 eine simulierte Distanz zu diesem Ziel generiert, die für die Bestimmung der relevanten Messgrössen (Horizontal-, Vertikalschwenkwinkel und/oder Auftreffposition) vielfach grösser erscheint als der reale Abstand d1 zwischen Referenzziel 70 und optischer Baugruppe 50.

Das zweite Referenzziel 71 hingegen ist anzielbar, ohne dass die Messstrahlung durch eine optische Baugruppe tritt. Somit wird durch dieses zweite Referenzziel 71 - im Vergleich zur simulierten Distanz mittels Ziel 70 - eine vergleichsweise kurze Distanz d2 bereitgestellt, die der realen Entfernung zwischen dem Retroreflektor 71 und z.B. der Strahllenkeinheit entspricht.

Durch diese Ausführung der Selbstkalibriereinheit 60 werden somit zwei deutlich unterschiedliche Distanzen zu den beiden Zielen 70,71 bereitgestellt bzw. "simuliert". Dies erlaubt die Ausführung einer Kalibrierung des Lasertrackers (an dessen Basis die Selbstkalibriereinheit angeordnet ist) durch ein Anzielen beider Ziele 70,71 in jeweils zwei Lagen (Zweilagenmessung). Das erste Ziel 70 wird zunächst mittels Ausrichten der Strahllenkeinheit des Trackers derart, dass die Messstrahlung auf das Ziel 70 trifft, angezielt. Dabei werden der horizontale und der vertikale Schwenkwinkel (Ausrichtung der Strahllenkeinheit relativ zur Stütze und Ausrichtung der Stütze relativ zur Basis) und die Auftreffposition der retro-reflektierten Messstrahlung auf der Tracking-PSD erfasst. Dann wird die Stütze im Wesentlichen um 180° verschwenkt und die Strahllenkeinheit wiederum zur Anzielung des Ziels 70 mittels der Messstrahlung ausgerichtet. In dieser zweiten Stellung werden wiederum der horizontale und der vertikale Schwenkwinkel und die Auftreffposition erfasst. Zusätzlich erfolgen diese zwei Messschritte zu dem zweiten Ziel 71. Aus den bestimmten Messgrössen dieser vier Messungen können in Folge durch ein Berücksichtigen der Grössen Kalibrierparameter berechnet werden, die zumindest einen PSD-Offset, Zielachsenfehler und/oder Zielachsenabstand angeben.

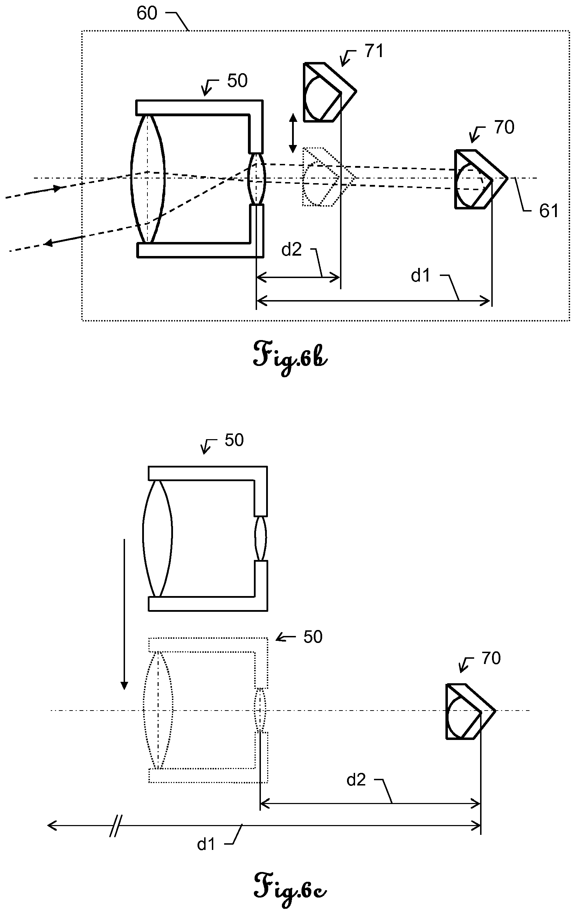

Fig.6b zeigt eine weitere Ausführungsform für eine erfindungsgemässe Selbstkalibriereinheit 60 mit zwei Referenzzielen 70,71 und einer als strahlaufweitende Optik ausgebildeten optischen Baugruppe 50, wobei der erste Reflektor 70 in einem festen Positionsverhältnis (und auf einer gemeinsamen optischen Achse 61) zur optischen Baugruppe 50 angeordnet ist und dadurch ein erster Abstand d1 zwischen Baugruppe 50 und Reflektor 70 definiert und eine erste simuliert Distanz D1 (wiederum speziell für die relevanten Messgrössen) gegeben ist. Das zweite retro-reflektierende Referenzziel 71 ist derart versetzbar ausgeführt, dass dieses Ziel 71 in den optischen Strahlengang eingebracht bzw. herausgesetzt werden kann.

Durch das Einbringen des zweiten Reflektors 71 in den Strahlengang wird ein zweiter Abstand d2 zur optischen Baugruppe 50 definiert und eine zweite simulierte Distanz D2 erzeugt. Dadurch dass die optische Baugruppe einen bestimmten Abbildungsfaktor definiert (Vergrösserungs- oder Verkleinerungsfaktor) weisen die simulierten Distanzen D1,D2 eine grössere (bzw. kleinere) Absolutdifferenz zueinander auf als der Unterschied zwischen den Abständen d1 und d2 beträgt. Somit werden zwei deutlich unterschiedliche simulierte Distanzen D1 und D2 für die Bestimmung der Messgrössen bereitgestellt, wobei jeweils Kalibrierungsmessungen mit diesen beiden Distanzen D1,D2 durchführbar sind.

Fig.6c zeigt eine weitere Ausführungsform für eine erfindungsgemässe Anordnung einer optischen Baugruppe 50 und eines Retroreflektors 70 zur Definition einer virtuellen, simulierten Distanz, wobei die optische Baugruppe 50 als (umgekehrter) Strahlaufweiter ausgebildet und vor den Reflektor 70 setzbar (z.B. einschwenkbar oder hineinfahrbar) ist. Der umgekehrte Strahlaufweiter 50 ist dabei so angeordnet, dass dieser in den optischen Strahlengang (auf die optische Achse) bringbar bzw. aus diesem herausnehmbar ist.

Zur Bereitstellung unterschiedlicher Distanzen zur Kalibrierung eines Lasertrackers wird in dieser Ausführung jeweils das Ziel 70 angezielt, wobei zum einen ein realer Abstand d1 als erste Kalibrierdistanz bereitgestellt ist (Strahlaufweiter ist nicht im Strahlengang) und zum anderen eine simulierte Distanz als zweite Kalibrierdistanz erzeugbar ist, sofern der umgekehrte Strahlaufweiter 50 sich im Strahlengang befindet. Die zweite Kalibrierdistanz ist dann definiert durch einen Vergrösserungsfaktor des umgekehrten Strahlaufweiters 50 und den Abstand d2, wobei zusätzlich der Abstand des umgekehrten Strahlaufweiters 50 zur Strahllenkeinheit berücksichtigt werden muss.

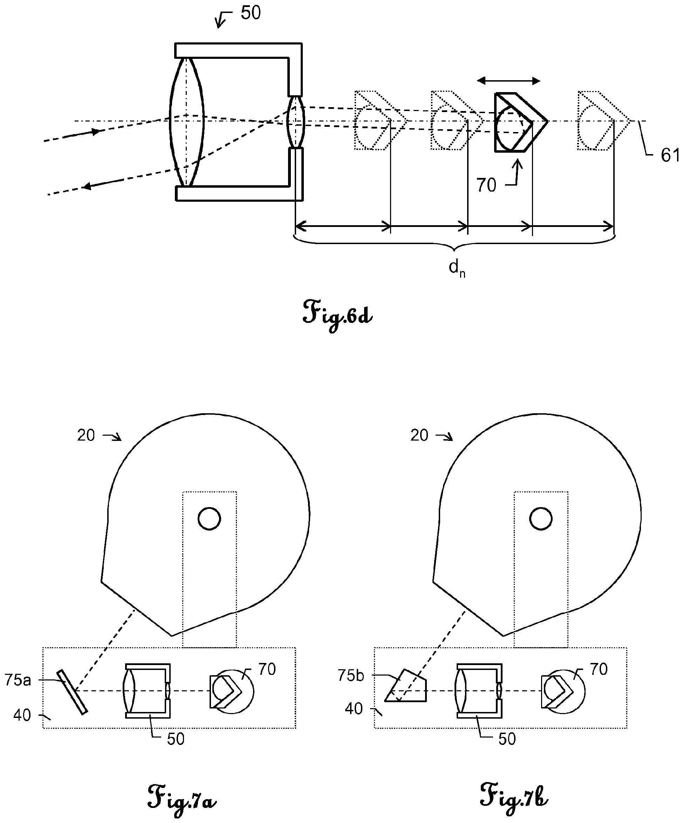

Fig.6d zeigt eine weitere Ausführungsform für eine erfindungsgemässe Anordnung einer optischen Baugruppe 50 und eines Retroreflektors 70 zur Erzeugung einer simulierten Distanz, wobei der Retroreflektor 70 entlang der optischen Achse 61 linear verfahrbar ist.

Dies erlaubt, anstelle von nur diskreten Abständen zwischen der optischen Baugruppe 50 und dem Reflektor 70 bereitzustellen, innerhalb einer durch die Länge des Verfahrweges vorgegebenen Bandbreite, beliebig viele solcher Abstände dₙ zu realisieren und dadurch mehrere unterschiedliche simulierte Distanzen Dₙ zu generieren. Durch ein Kalibriermessen mit diesen mehreren simulierten Distanzen Dₙ kann eine verbesserte Fehlererkennung und Genauigkeitssteigerung (durch Überbestimmung) realisiert werden.

Zur hineichend genauen Bestimmung der Abstände dₙ für die Kalibrierungsmessungen ist insbesondere ein Lineardistanzgeber oder eine alternative Abstandsbestimmungseinheit in Verbindung mit dem verfahrbaren Retroreflektor 70 vorgesehen.

In einer weiteren erfindungsgemässen Ausführungsform einer Selbstkalibriereinheit (nicht gezeigt) ist die optische Baugruppe als Zoomobjektiv ausgebildet und das retro-reflektierende Referenzziel positionsfest zum Zoomobjektiv platziert. Bei Anzielen des Referenzziels tritt die Messstrahlung durch das Objektiv. Durch ein Verändern des Zoomfaktors des Objektivs können damit ebenfalls unterschiedliche simulierbare Distanzen zum Referenzziel erzeugt werden und Kalibrierungsmessung bei diesen simulierbaren Distanzen durchgeführt werden.

Gemäss einer weiteren erfindungsgemässen Ausführungsform einer Selbstkalibriereinheit 60 (ebenfalls nicht gezeigt) ist anstelle oder zusätzlich zum der Retroreflektor 70 die optische Baugruppe 50 entlang der optischen Achse 61 linear verfahrbar.

Die Figuren 7a und 7b zeigen jeweils ein Ausführungsbeispiel für einen erfindungsgemässen Lasertracker mit einer Strahllenkeinheit 20 und einer in der Basis 40 des Trackers integrierten Selbstkalibriereinheit. Die Selbstkalibriereinheit der Ausführungsform gemäss Figur 7a weist in der Basis 40 ein als Spiegel 75a ausgeführtes Strahlumlenkmittel auf vermittels dessen ein Messstrahl durch die optische Baugruppe 50 gelenkt werden kann, sodass die Strahlung auf dem Referenzziel 70 auftrifft. Die Ausführungsform gemäss Figur 7b weist anstelle des Spiegels 7a ein Umlenkprisma 75b zur Umlenkung des Messstrahls auf. In diesem Zusammenhang ist ausserdem ein Einsatz alternativer Strahlumlenkmittel zur Strahlführung auf die optische Baugruppe 50 möglich. Eine Kalibrierung des Systems kann mit dieser Anordnung wie oben beschrieben erfolgen.

Es versteht sich, dass diese dargestellten Figuren nur mögliche Ausführungsbeispiele schematisch darstellen. Die verschiedenen Ansätze können erfindungsgemäss ebenso miteinander sowie mit Kalibrierverfahren und mit gattungsgemässen Messgeräten, insbesondere Lasertrackern, des Stands der Technik kombiniert werden.

## Patentansprüche

1. Lasertracker (10,11) zur Positionsbestimmung eines Ziels (103) sowie insbesondere zur fortlaufenden Verfolgung des Ziels (103) mit
• einer Strahlquelle zur Erzeugung von Messstrahlung (55),
• einer eine Stehachse (41) definierenden Basis (40),
• einer Stütze (30), die eine im Wesentlichen orthogonal zur Stehachse (41) stehende Kippachse definiert, wobei
□ die Stütze (30) relativ zur Basis (40) um die Stehachse (41) motorisiert schwenkbar ist und
□ ein Horizontalschwenkwinkel durch eine Ausrichtung der Stütze (30) relativ zur Basis (40) definiert wird,
• einer um die Kippachse relativ zur Stütze (30) motorisiert schwenkbaren Strahllenkeinheit (16,20), wobei ein Vertikalschwenkwinkel durch eine Ausrichtung der Strahllenkeinheit (16,20) relativ zur Stütze (30) definiert wird,
□ zur Emission und Ausrichtung der Messstrahlung (55) und
□ zum Empfang von zumindest einem Teil der am Ziel (103) reflektierten Messstrahlung (55),
• Winkelmessfunktionalität zur Bestimmung des Horizontalschwenkwinkels und des Vertikalschwenkwinkels,
• Entfernungsmessfunktionalität und
• einem photosensitiven Flächendetektor (21) zur Detektion einer Auftreffposition der reflektierten Messstrahlung (55) auf dem Flächendetektor (21) und zur Erzeugung eines Ausgangssignals zur Steuerung einer Zielverfolgungsfunktionalität,
**dadurch gekennzeichnet, dass**
• die Basis eine Selbstkalibriereinheit (60) aufweist mit
□ mindestens einem ersten retro-reflektierenden Referenzziel (70,71) und
□ mindestens einer als Verkleinerungsobjektiv wirkenden optischen Baugruppe (50), und
• die Selbstkalibriereinheit (60) zur Bestimmung von zumindest einem Kalibrierparameter bezüglich einer Position und/oder Richtung der Messstrahlung (55) für den Lasertracker (10,11) mit der Messstrahlung (55) derart anzielbar ist, dass ein optischer Strahlengang der Messstrahlung (55) durch die optische Baugruppe (50) verläuft und die Messstrahlung (55) auf das mindestens erste retro-reflektierende Referenzziel (70,71) trifft, wodurch
□ eine erste Kalibriermessung mit einer hinsichtlich relevanter Messgrössen für die Bestimmung des zumindest einen Kalibrierparameters simulierten Distanz zu dem mindestens ersten retro-reflektierenden Referenzziel (70,71) durchführbar ist und
□ die simulierte Distanz grösser ist als eine tatsächlich strukturell gegebene Entfernung (d',d1,d2,dₙ) zu dem mindestens ersten retro-reflektierenden Referenzziel (70,71).

2. Lasertracker (10,11) nach Anspruch 1, **dadurch gekennzeichnet, dass** die relevanten Messgrössen repräsentiert sind durch den Horizontalschwenkwinkel, den Vertikalschwenkwinkel und/oder die Auftreffposition auf dem photosensitiven Flächendetektor (21).

3. Lasertracker (10,11) nach Anspruch 1 oder 2, **dadurch gekennzeichnet, dass**
der zumindest eine Kalibrierparameter angibt
• einen Servokontrollpunkt (23) auf dem positionssensitiven Flächendetektor (21) zur Regelung der Ausrichtung der Messstrahlung (55) auf das Ziel (103) im Rahmen der Zielverfolgungsfunktionalität und/oder
• einen Versatz (28), insbesondere parallelen Versatz, zwischen einer durch eine strukturelle Ausbildung der Strahllenkeinheit (16,20) definierten Zielachse (27) und einer durch die Emission der Messstrahlung (55) definierten Emissionsachse (25) und/oder
• einen einen Winkelversatz zwischen der Zielachse (27) und der Emissionsachse (25) angebenden Zielachsenfehler.

4. Lasertracker (10,11) nach einem der Ansprüche 1 bis 3, **dadurch gekennzeichnet, dass**
die optische Baugruppe (50) zumindest zwei optische Elemente (51,52), insbesondere diffraktive optische Elemente, zur Formung der Messstrahlung (55) aufweist, insbesondere womit zumindest eine Stahlquerschnittsfläche der Messstrahlung (55) verkleinerbar ist und/oder der Strahlengang der Messstrahlung (55) veränderbar ist, und/oder die optische Baugruppe (50) einen bestimmten optischen Abbildungsmassstab im Bereich zwischen 0 und 1 definiert.

5. Lasertracker (10,11) nach einem der Ansprüche 1 bis 4, **dadurch gekennzeichnet, dass**
zumindest eine zweite Kalibriermessung mit zumindest einer weiteren, insbesondere simulierten, Distanz dadurch bereitgestellt wird, dass die Selbstkalibriereinheit (60)
• ein zweites retro-reflektierendes Referenzziel (70,71) aufweist, das mit der Messstrahlung (55) anzielbar ist, und/oder
• eine derart ausgebildete Positionierungseinheit aufweist, dass
□ die optische Baugruppe (50) relativ zum mindestens ersten und/oder zweiten retro-reflektierenden Referenzziel (70,71) definiert positionierbar ist, insbesondere definiert relativ versetzbar und/oder drehbar ist, insbesondere linear parallel zum optischen Strahlengang, und/oder
□ das mindestens erste und/oder zweite retro-reflektierende Referenzziel (70,71) relativ zur optischen Baugruppe (50) definiert positionierbar ist, insbesondere linear parallel zum optischen Strahlengang versetzbar ist,
wobei die zumindest eine weitere Distanz sich von der simulierten Distanz unterscheidet.

6. Lasertracker (10,11) nach Anspruch 5, **dadurch gekennzeichnet, dass**
• die simulierte Distanz mittels Versetzen der optischen Baugruppe (50) und/oder des mindestens ersten oder zweiten retro-reflektierenden Referenzziels (70,71) vermittels der Positionierungseinheit derart, dass der optische Strahlengang durch die optische Baugruppe (50) verläuft und auf das mindestens erste retro-reflektierende Referenzziel (70,71) trifft, erzeugbar ist, und/oder
• die zumindest eine weitere Distanz mittels Versetzen der optischen Baugruppe (50) vermittels der Positionierungseinheit aus dem optischen Strahlengang heraus derart, dass die Messstrahlung (55) versetzt zur optischen Baugruppe (50) verläuft, erzeugbar ist, und/oder
• die zumindest eine weitere Distanz mittels linearen Verschiebens des mindestens ersten oder zweiten retro-reflektierenden Referenzziels (70,71) und/oder der optischen Baugruppe (50) parallel zum optischen Strahlengang erzeugbar ist.

7. Lasertracker (10,11) nach einem der Ansprüche 1 bis 6, **dadurch gekennzeichnet, dass**
der Lasertracker (10,11) eine derart ausgebildete Steuerungs- und Auswerteeinheit aufweist, dass zur Bestimmung des zumindest einen Kalibrierparameters eine Kalibrierfunktionalität ausführbar ist mit
• einem Ausführen einer Zweilagenmessung mit der simulierten und/oder mit der zumindest einen weiteren Distanz, wobei im Rahmen der Zweilagenmessung zwei Messungen in zwei Lagen bei zwei unterschiedlichen Horizontalschwenkwinkeln und bei zwei unterschiedlichen Vertikalschwenkwinkeln ausgeführt werden und für jede der zwei Messungen
□ die Messstrahlung (55) vermittels Ausrichten der Strahllenkeinheit (16,20) relativ zur Basis (40) auf das die simulierte und/oder die zumindest eine weitere Distanz bereitstellende Referenzziel (70,71) der Selbstkalibriereinheit (60) ausgerichtet wird,
□ der jeweilige Horizontalschwenkwinkel und der jeweilige Vertikalschwenkwinkel bestimmt werden und
□ jeweils die Auftreffposition der an dem jeweiligen Referenzziel (70,71) reflektierten Messstrahlung (55) auf dem photosensitiven Flächendetektor (21) bestimmt wird, und
• einem Ableiten des zumindest einen Kalibrierparameters in Abhängigkeit von den bestimmten Horizontalschwenkwinkeln, Vertikalschwenkwinkeln und Auftreffpositionen,
wobei die Zweilagenmessung die erste Kalibriermessung repräsentiert.

8. Lasertracker (10,11) nach Anspruch 7,
**dadurch gekennzeichnet, dass**
die Steuerungs- und Auswerteeinheit derart ausgebildet ist, dass bei Ausführung von jeweils einer Zweilagenmessung für die simulierte und die zumindest eine weitere Distanz im Rahmen der Kalibrierfunktionalität
• der Servokontrollpunkt (23) auf dem positionssensitiven Flächendetektor (21) zur Regelung der Ausrichtung der Messstrahlung (55) auf das Ziel (103) im Rahmen der Zielverfolgungsfunktionalität und
• der Versatz (28), insbesondere parallele Versatz, zwischen der durch die strukturelle Ausbildung der Strahllenkeinheit (16,20) definierten Zielachse (27) und der durch die Emission der Messstrahlung (55) definierten Emissionsachse (25) und
• der den Winkelversatz zwischen der Zielachse (27) und der Emissionsachse (25) angebende Zielachsenfehler als Kalibrierparameter bestimmt werden.

9. Lasertracker (10,11) nach Anspruch 7 oder 8,
**dadurch gekennzeichnet, dass**
im Rahmen des Ausführens der Kalibrierfunktionalität durch Anzielen zumindest des ersten retro-reflektierenden Referenzziels (70,71) vermittels der optischen Baugruppe (50) eine derartige Winkelsimulation zumindest zum ersten retro-reflektierenden Referenzziel (70,71) bewirkbar ist, dass eine durch die Zweilagenmessung bestimmbare Differenz der Horizontalschwenkwinkel, Vertikalschwenkwinkeln und der Auftreffposition so bestimmt wird, als ob das mindestens erste retro-reflektierende Referenzziel (70,71) weiter entfernt wäre als das Referenzziel (70,71) tatsächlich durch die strukturell gegebene Entfernung (d',d1,d2,dₙ) entfernt ist.

10. Lasertracker (10,11) nach einem der Ansprüche 1 bis 9,
**dadurch gekennzeichnet, dass**
die Selbstkalibriereinheit (60) eine Strahlführungseinheit zur Definition des optischen Strahlengangs und zur Führung der Messstrahlung (55) zum mindestens ersten und/oder zweiten retro-reflektierenden Referenzziel (70,71) aufweist, insbesondere wobei die Strahlführungseinheit derart ausgebildet ist, dass die Messstrahlung (55) vermittels der Strahlführungseinheit umlenkbar ist, insbesondere mittels eines Spiegels.

11. Lasertracker (10,11) nach einem der Ansprüche 1 bis 10, **dadurch gekennzeichnet, dass**
der Lasertracker (10,11), insbesondere die Steuerungs- und Auswerteeinheit, derart ausgebildet ist, dass ein Kalibrierverfahren nach einem der Ansprüche 12 bis 14 ausführbar ist.

12. Kalibrierverfahren für einen Lasertracker (10,11), der ausgebildet ist zur Positionsbestimmung eines Ziels (103) sowie insbesondere zur fortlaufenden Verfolgung des Ziels (103) und aufweist
• eine Strahlquelle zur Erzeugung von Messstrahlung (55),
• eine eine Stehachse (41) definierende Basis (40),
• eine Stütze (30), die eine im Wesentlichen orthogonal zur Stehachse (41) stehenden Kippachse definiert, wobei
□ die Stütze (30) relativ zur Basis (40) um die Stehachse (41) motorisiert schwenkbar ist und
□ ein Horizontalschwenkwinkel durch eine Ausrichtung der Stütze (30) relativ zur Basis (40) definiert wird,
• eine um die Kippachse relativ zur Stütze (30) motorisiert schwenkbare Strahllenkeinheit (16,20), wobei ein Vertikalschwenkwinkel durch eine Ausrichtung der Strahllenkeinheit (16,20) relativ zur Stütze (30) definiert wird,
□ zur Emission und Ausrichtung der Messstrahlung (55) und
□ zum Empfang von zumindest einem Teil der am Ziel (103) reflektierten Messstrahlung (55), und
• einen photosensitiven Flächendetektor (21) zur Detektion einer Auftreffposition der reflektierten Messstrahlung (55) auf dem Flächendetektor (21) und zur Erzeugung eines Ausgangssignals zur Steuerung einer Zielverfolgungsfunktionalität,
wobei im Rahmen des Kalibrierverfahrens ein Ausführen von zumindest einer Kalibiermessung zu mindestens einem ersten retro-reflektierenden Referenzziel (70,71) erfolgt mit
• einem Bestimmen des Horizontalschwenkwinkels, des Vertikalschwenkwinkels und der Auftreffposition der an dem mindestens ersten retro-reflektierenden Referenzziel (70,71) reflektierten Messstrahlung (55) auf dem photosensitiven Flächendetektor (21) und
• einem Ableiten von zumindest einem Kalibrierparameter bezüglich einer Position und/oder Richtung der Messstrahlung (55) in Abhängigkeit von dem bestimmen Horizontalschwenkwinkel, dem bestimmen Vertikalschwenkwinkel und der bestimmen Auftreffposition,
**dadurch gekennzeichnet, dass**
beim Ausführen der zumindest einen Kalibriermessung das mindestens erste retro-reflektierende Referenzziel (70,71) derart angezielt wird, dass ein optischer Strahlengang der Messstrahlung (55) durch eine verkleinernd wirkende optische Baugruppe (50) verläuft und die Messstrahlung (55) auf das mindestens erste retro-reflektierende Referenzziel (70,71) trifft, sodass die Kalibriermessung mit einer hinsichtlich relevanter Messgrössen für die Bestimmung des zumindest einen Kalibrierparameters simulierten Distanz erfolgt, wobei die simulierte Distanz zu dem mindestens ersten retro-reflektierenden Referenzziel (70,71) grösser ist als eine tatsächlich strukturell gegebene Entfernung (d',d1,d2,dₙ) zu dem mindestens ersten retro-reflektierenden Referenzziel (70,71), insbesondere wobei die relevanten Messgrössen repräsentiert sind durch den Horizontalschwenkwinkel, den Vertikalschwenkwinkel und/oder die Auftreffposition auf dem photosensitiven Flächendetektor (21).

13. Kalibrierverfahren nach Anspruch 12,
**dadurch gekennzeichnet, dass**
zumindest eine weitere Distanz, insbesondere simulierte Distanz, bereitgestellt wird durch ein Anzielen eines zweiten retro-reflektierenden Referenzziels (70,71), und/oder die zumindest eine weitere Distanz durch ein Versetzen der optischen Baugruppe (50) relativ zum mindestens ersten und/oder zweiten retro-reflektierenden Referenzziel (70,71) erzeugt wird.

14. Kalibrierverfahren nach einem der Ansprüche 12 oder 13, **dadurch gekennzeichnet, dass**
für die simulierte und/oder für die zumindest eine weitere Distanz mindestens zwei Kalibiermessungen, insbesondere jeweils zwei Kalibiermessungen, bei zwei unterschiedlichen Horizontalschwenkwinkeln und bei zwei unterschiedlichen Vertikalschwenkwinkeln ausgeführt werden und für jede Kalibiermessung
• die Messstrahlung (55) vermittels Ausrichten der Strahllenkeinheit (16,20) relativ zur Basis (40) auf das mindestens erste und/oder zweite retro-reflektierende Referenzziel (70,71) ausgerichtet wird,
• der jeweilige Horizontalschwenkwinkel und der jeweilige Vertikalschwenkwinkel bestimmt werden und
• jeweils die Auftreffposition auf dem photosensitiven Flächendetektor (21) bestimmt wird, und der zumindest eine Kalibrierparameter in Abhängigkeit von den Horizontalschwenkwinkeln, den Vertikalschwenkwinkeln und den Auftreffpositionen abgeleitet wird, insbesondere wobei
• ein Servokontrollpunkt (23) auf dem positionssensitiven Flächendetektor (21) zur Regelung einer Ausrichtung der Messstrahlung (55) auf das Ziel (103) und
• ein Versatz (28), insbesondere paralleler Versatz, zwischen einer durch die strukturelle Ausbildung der Strahllenkeinheit (16,20) definierten Zielachse (27) und einer durch die Emission der Messstrahlung (55) definierten Emissionsachse (25) und
• ein einen Winkelversatz zwischen der Zielachse (27) und der Emissionsachse (25) angebender Zielachsenfehler
als Kalibrierparameter bestimmt werden.

15. Computerprogrammprodukt, das auf einem maschinenlesbaren Träger gespeichert ist,
• zur Steuerung des Ausführens der zumindest einen Kalibriermessung für zumindest eine simulierte Distanz und
• zur Ausführung des Ableitens des zumindest einen Kalibrierparameters eines Kalibrierverfahrens nach einem der Ansprüche 12 bis 14, wenn das Computerprogrammprodukt auf einer Steuerungs- und Auswerteeinheit des Lasertrackers (10,11), nach einem der Ansprüche 1 bis 11 ausgeführt wird.

## Claims

1. Laser tracker (10, 11) for position determination of a target (103) and in particular for progressive tracking of the target (103), having
• a beam source for generating measurement radiation (55),
• a base (40), which defines a standing axis (41),
• a support (30), which defines a tilt axis standing essentially orthogonally to the standing axis (41), wherein
▪ the support (30) is pivotable by a motor in relation to the base (40) about the standing axis (41) and
▪ a horizontal pivot angle is defined by an alignment of the support (30) in relation to the base (40),
• a beam deflection unit (16, 20), which is pivotable by a motor about the tilt axis in relation to the support (30), wherein a vertical pivot angle is defined by an alignment of the beam deflection unit (16, 20) in relation to the support (30),
▪ for emitting and aligning the measurement radiation (55) and
▪ for receiving at least a part of the measurement radiation (55) reflected on the target (103),
• angle measuring functionality for determining the horizontal pivot angle and the vertical pivot angle,
• distance measuring functionality, and
• a photosensitive surface detector (21) for detecting a position of incidence of the reflected measurement radiation (55) on the surface detector (21) and for generating an output signal for controlling a target tracking functionality,
**characterized in that**
• the base has a self-calibration unit (60) having
▪ at least one first retroreflective reference target (70, 71) and
▪ at least one optical assembly (50) acting as a reduction objective lens, and
• the self-calibration unit (60) can be targeted using the measurement radiation (55) for determining at least one calibration parameter with respect to a position and/or direction of the measurement radiation (55) for the laser tracker (10, 11) such that an optical beam path of the measurement radiation (55) extends through the optical assembly (50) and the measurement radiation (55) is incident on the at least first retroreflective reference target (70, 71), whereby
▪ a first calibration measurement can be carried out using a distance, which is simulated with respect to relevant measured variables for the determination of the at least one calibration parameter, to the at least first retroreflective reference target (70, 71) and
▪ the simulated distance is greater than an actually structurally provided distance (d', d1, d2, dn) to the at least first retroreflective reference target (70, 71).

2. Laser tracker (10, 11) as claimed in claim 1, **characterized in that**
the relevant measured variables are represented by the horizontal pivot angle, the vertical pivot angle, and/or the position of incidence on the photosensitive surface detector (21).

3. Laser tracker (10, 11) as claimed in claim 1 or 2, **characterized in that**
the at least one calibration parameter specifies
• a servo-monitoring point (23) on the position-sensitive surface detector (21) for regulating the alignment of the measurement radiation (55) on the target (103) in the scope of the target tracking functionality, and/or
• an offset (28), in particular a parallel offset, between a target axis (27) defined by a structural implementation of the beam deflection unit (16, 20) and an emission axis (25) defined by the emission of the measurement radiation (55), and/or
• a target axis error which specifies an angle offset between the target axis (27) and the emission axis (25).

4. Laser tracker (10, 11) as claimed in any one of claims 1 to 3,
**characterized in that**
the optical assembly (50) has at least two optical elements (51, 52), in particular diffractive optical elements, for shaping the measurement radiation (55), in particular whereby at least one beam cross-sectional area of the measurement radiation (55) can be reduced in size and/or the beam path of the measurement radiation (55) is variable, and/or the optical assembly (50) defines a specific optical imaging scale in the range between 0 and 1.

5. Laser tracker (10, 11) as claimed in any one of claims 1 to 4,
**characterized in that**
at least one second calibration measurement using at least one further, in particular simulated, distance is provided **in that** the self-calibration unit (60)
• has a second retroreflective reference target (70, 71), which can be targeted using the measurement radiation (55) and/or
• has a positioning unit implemented such that
▪ the optical assembly (50) can be positioned in a defined manner in relation to the at least first and/or second retroreflective reference target (70, 71), in particular can be relatively offset and/or rotated in a defined manner, in particular linearly in parallel to the optical beam path, and/or
▪ the at least first and/or second retroreflective reference target (70, 71) can be positioned in a defined manner in relation to the optical assembly (50), in particular can be offset linearly in parallel to the optical beam path,
wherein the at least one further distance differs from the simulated distance.

6. Laser tracker (10, 11) as claimed in claim 5, **characterized in that**
• the simulated distance can be generated by means of offsetting the optical assembly (50) and/or the at least first or second retroreflective reference target (70, 71) by means of the positioning unit such that the optical beam path extends through the optical assembly (50) and is incident on the at least first retroreflective reference target (70, 71), and/or
• the at least one further distance can be generated by means of offsetting the optical assembly (50) by means of the positioning unit out of the optical beam path such that the measurement radiation (55) extends offset to the optical assembly (50), and/or
• the at least one further distance can be generated by means of linear displacement of the at least first or second retroreflective reference target (70, 71) and/or the optical assembly (50) in parallel to the optical beam path.

7. Laser tracker (10, 11) as claimed in any one of claims 1 to 6,
**characterized in that**
the laser tracker (10, 11) has a control and analysis unit implemented such that a calibration functionality can be executed to determine the at least one calibration parameter, having
• an execution of a two-location measurement using the simulated distance and/or using the at least one further distance, wherein, in the scope of the two-location measurement, two measurements are executed in two locations at two different horizontal pivot angles and at two different vertical pivot angles and for each of the two measurements
▪ the measurement radiation (55) is aligned by means of alignment of the beam deflection unit (16, 20) in relation to the base (40) on the reference target (70, 71), which provides the simulated distance and/or the at least one further distance, of the self-calibration unit (60),
▪ the respective horizontal pivot angle and the respective vertical pivot angle are determined, and
▪ in each case the position of incidence of the measurement radiation (55), which is reflected on the respective reference target (70, 71), on the photosensitive surface detector (21) is determined, and
• a derivation of the at least one calibration parameter in dependence on the determined horizontal pivot angles, vertical pivot angles, and positions of incidence,
wherein the two-location measurement represents the first calibration measurement.

8. Laser tracker (10, 11) as claimed in claim 7,
**characterized in that**
the control and analysis unit is implemented such that during execution of one two-location measurement in each case for the simulated distance and the at least one further distance in the scope of the calibration functionality
• the servo-monitoring point (23) on the position-sensitive surface detector (21) for regulating the alignment of the measurement radiation (55) on the target (103) in the scope of the target tracking functionality and
• the offset (28), in particular a parallel offset, between the target axis (27) defined by the structural implementation of the beam deflection unit (16, 20) and the emission axis (25) defined by the emission of the measurement radiation (55), and
• the target axis error, which specifies the angle offset between the target axis (27) and the emission axis (25),
are determined as calibration parameters.

9. Laser tracker (10, 11) as claimed in claim 7 or 8, **characterized in that**
in the scope of the execution of the calibration functionality, by targeting at least the first retroreflective reference target (70, 71) by means of the optical assembly (50), an angle simulation at least in relation to the first retroreflective reference target (70, 71) can be caused such that a difference, which can be determined by the two-location measurement, of the horizontal pivot angle, vertical pivot angles, and the position of incidence is determined as if the at least first retroreflective reference target (70, 71) were at a greater distance than the actual distance of the reference target (70, 71) due to the structurally provided distance (d', d1, d2, dn).

10. Laser tracker (10, 11) as claimed in any one of claims 1 to 9,
**characterized in that**
the self-calibration unit (60) has a beam guiding unit for defining the optical beam path and for guiding the measurement radiation (55) to the at least first and/or second retroreflective reference target (70, 71), in particular wherein the beam guiding unit is implemented such that the measurement radiation (55) can be deflected by means of the beam guiding unit, in particular by means of a mirror.

11. Laser tracker (10, 11) as claimed in any one of claims 1 to 10,
**characterized in that**
the laser tracker (10, 11), in particular the control and analysis unit, is implemented such that a calibration method as claimed in any one of claims 12 to 14 is executable.

12. Calibration method for a laser tracker (10, 11), which is implemented for the position determination of a target (103) and also in particular for the progressive tracking of the target (103) and has
• a beam source for generating measurement radiation (55),
• a base (40), which defines a standing axis (41),
• a support (30), which defines a tilt axis standing essentially orthogonally to the standing axis (41), wherein
▪ the support (30) is pivotable by a motor in relation to the base (40) about the standing axis (41) and
▪ a horizontal pivot angle is defined by an alignment of the support (30) in relation to the base (40),
• a beam deflection unit (16, 20), which is pivotable by a motor about the tilt axis in relation to the support (30), wherein a vertical pivot angle is defined by an alignment of the beam deflection unit (16, 20) in relation to the support (30),
▪ for emitting and aligning the measurement radiation (55) and
▪ for receiving at least a part of the measurement radiation (55) reflected on the target (103), and
• a photosensitive surface detector (21) for detecting a position of incidence of the reflected measurement radiation (55) on the surface detector (21) and for generating an output signal for controlling a target tracking functionality,
wherein, in the scope of the calibration method, an execution of at least one calibration measurement to at least one first retroreflective reference target (70, 71) is performed comprising
• a determination of the horizontal pivot angle, the vertical pivot angle, and the position of incidence of the measurement radiation (55), which is reflected on the at least first retroreflective reference target (70, 71), on the photosensitive surface detector (21), and
• a derivation of at least one calibration parameter with respect to a position and/or direction of the measurement radiation (55) in dependence on the determined horizontal pivot angle, the determined vertical pivot angle, and the determined position of incidence,
**characterized in that,**
during the execution of the at least one calibration measurement, the at least first retroreflective reference target (70, 71) is targeted such that an optical beam path of the measurement radiation (55) extends through a reducing optical assembly (50) and the measurement radiation (55) is incident on the at least first retroreflective reference target (70, 71), so that the calibration measurement is performed using a distance which is simulated with respect to relevant measured variables for the determination of the at least one calibration parameter, wherein the simulated distance to the at least first retroreflective reference target (70, 71) is greater than an actually structurally provided distance (d', d1, d2, dₙ) to the at least first retroreflective reference target (70, 71), in particular wherein the relevant measured variables are represented by the horizontal pivot angle, the vertical pivot angle, and/or the position of incidence on the photosensitive surface detector (21) .

13. Calibration method as claimed in claim 12, **characterized in that**
at least one further distance, in particular a simulated distance, is provided by targeting a second retroreflective reference target (70, 71), and/or the at least one further distance is generated by an offset of the optical assembly (50) in relation to the at least first and/or second retroreflective reference target (70, 71).

14. Calibration method as claimed in any one of claims 12 or 13,
**characterized in that,** for the simulated distance and/or for the at least one further distance, at least two calibration measurements, in particular two calibration measurements in each case, are executed at two different horizontal pivot angles and at two different vertical pivot angles and for each calibration measurement
• the measurement radiation (55) is aligned by means of alignment of the beam deflection unit (16, 20) in relation to the base (40) on the at least first and/or second retroreflective reference target (70, 71),
• the respective horizontal pivot angle and the respective vertical pivot angle are determined, and
• in each case the position of incidence on the photosensitive surface detector (21) is determined, and
the at least one calibration parameter is derived in dependence on the horizontal pivot angles, the vertical pivot angles, and the positions of incidence, in particular wherein
• a servo-monitoring point (23) on the position-sensitive surface detector (21) for regulating an alignment of the measurement radiation (55) on the target (103) and
• an offset (28), in particular a parallel offset, between a target axis (27) defined by the structural implementation of the beam deflection unit (16, 20) and an emission axis (25) defined by the emission of the measurement radiation (55), and
• a target axis error, which specifies an angle offset between the target axis (27) and the emission axis (25),
are determined as calibration parameters.

15. Computer program product, which is stored on a machine-readable carrier,
• for controlling the execution of the at least one calibration measurement for at least one simulated distance and
• for executing the derivation of the at least one calibration parameter
of a calibration method as claimed in any one of claims 12 to 14, in particular when the computer program product is executed on a laser tracker (10, 11), in particular on a control and analysis unit of the laser tracker (10, 11), as claimed in any one of claims 1 to 11.

## Revendications

1. Laser de poursuite (10, 11) pour déterminer la position d'une cible (103) et en particulier pour suivre en continu la cible (103), comprenant
• une source de faisceau pour produire un rayonnement de mesure (55),
• une base (40) définissant un axe vertical (41),
• un support (30) qui définit un axe de basculement sensiblement orthogonal à l'axe vertical (41), dans lequel
□ le support (30) peut pivoter de manière motorisée par rapport à la base (40) autour de l'axe vertical (41) et
□ un angle de pivotement horizontal est défini par une orientation du support (30) par rapport à la base (40),
• une unité de déviation de faisceau (16, 20) pouvant pivoter de manière motorisée autour de l'axe de basculement par rapport au support (30), un angle de pivotement vertical étant défini par une orientation de l'unité de déviation de faisceau (16, 20) par rapport au support (30),
□ pour l'émission et l'orientation du rayonnement de mesure (55) et
□ pour la réception d'au moins une partie du rayonnement de mesure (55) réfléchi sur la cible (103),
• une fonctionnalité de mesure d'angle pour déterminer l'angle de pivotement horizontal et l'angle de pivotement vertical,
• une fonctionnalité de mesure de distance et
• un détecteur surfacique photosensible (21) pour détecter une position d'impact du rayonnement de mesure (55) réfléchi sur le détecteur surfacique (21) et pour produire un signal de sortie pour commander une fonctionnalité de poursuite de cible,
**caractérisé en ce que**
• la base présente une unité d'auto-étalonnage (60) comprenant
□ au moins une première cible de référence rétroréfléchissante (70, 71) et
□ au moins un ensemble optique (50) agissant comme objectif de réduction, et
• l'unité d'auto-étalonnage (60) peut, pour déterminer au moins un paramètre d'étalonnage par rapport à une position et/ou une direction du rayonnement de mesure (55) du laser de poursuite (10, 11), être visée avec le rayonnement de mesure (55) de telle manière qu'un trajet de faisceau optique du rayonnement de mesure (55) traverse l'ensemble optique (50) et que le rayonnement de mesure (55) frappe ladite au moins première cible de référence rétroréfléchissante (70, 71), de sorte que
□ une première mesure d'étalonnage peut être effectuée avec une distance à ladite au moins première cible de référence rétroréfléchissante (70, 71) simulée en ce qui concerne des grandeurs de mesure pertinentes pour la détermination dudit au moins un paramètre d'étalonnage et
□ la distance simulée est supérieure à une distance effectivement existante structurellement (d', d1, d2, dₙ) à ladite au moins première cible de référence rétroréfléchissante (70, 71).

2. Laser de poursuite (10, 11) selon la revendication 1,
**caractérisé en ce que**
les grandeurs de mesure pertinentes sont représentées par l'angle de pivotement horizontal, l'angle de pivotement vertical et/ou la position d'impact sur le détecteur surfacique photosensible (21).

3. Laser de poursuite (10, 11) selon la revendication 1 ou 2,
**caractérisé en ce que**
ledit au moins un paramètre d'étalonnage indique
• un point de servo-contrôle (23) sur le détecteur surfacique sensible à la position (21) pour régler l'orientation du rayonnement de mesure (55) sur la cible (103) dans le cadre de la fonctionnalité de poursuite de cible et/ou
• un décalage (28), en particulier un décalage parallèle, entre un axe cible (27) défini par une configuration structurelle de l'unité de déviation de faisceau (16, 20) et un axe d'émission (25) défini par l'émission du rayonnement de mesure (55) et/ou
• une erreur d'axe cible indiquant un décalage angulaire entre l'axe cible (27) et l'axe d'émission (25).

4. Laser de poursuite (10, 11) selon l'une des revendications 1 à 3, **caractérisé en ce que**
l'ensemble optique (50) présente au moins deux éléments optiques (51, 52), en particulier des éléments optiques diffractifs, pour former le rayonnement de mesure (55), en particulier avec lesquels au moins une surface de section transversale du rayonnement de mesure (55) peut être réduite et/ou le trajet de faisceau du rayonnement de mesure (55) peut être modifié, et/ou l'ensemble optique (50) définit une échelle de reproduction optique déterminée dans la plage entre 0 et 1.

5. Laser de poursuite (10, 11) selon l'une des revendications 1 à 4, **caractérisé en ce que**
au moins une deuxième mesure d'étalonnage avec au moins une autre distance, en particulier simulée, est fournie par le fait que l'unité d'auto-étalonnage (60)
• présente une deuxième cible de référence rétroréfléchissante (70, 71) qui peut être visée avec le rayonnement de mesure (55) et/ou
• présente une unité de positionnement conçue de telle sorte que
□ l'ensemble optique (50) peut être positionné d'une manière définie par rapport à ladite au moins première et/ou deuxième cible de référence rétroréfléchissante (70, 71), en particulier peut être déplacé et/ou tourné relativement d'une manière définie, en particulier linéairement et parallèlement au trajet de faisceau optique, et/ou
□ ladite au moins première et/ou deuxième cible de référence rétroréfléchissante (70, 71) peut être positionnée d'une manière définie par rapport à l'ensemble optique (50), en particulier peut être déplacée linéairement et parallèlement au trajet de faisceau optique,
ladite au moins une autre distance étant différente de la distance simulée.

6. Laser de poursuite (10, 11) selon la revendication 5,
**caractérisé en ce que**
• la distance simulée peut être produite en déplaçant l'ensemble optique (50) et/ou ladite au moins première ou deuxième cible de référence rétroréfléchissante (70, 71) au moyen de l'unité de positionnement de telle sorte que le trajet de faisceau optique traverse l'ensemble optique (50) et frappe ladite au moins première cible de référence rétroréfléchissante (70, 71), et/ou
• ladite au moins une autre distance peut être produite en déplaçant l'ensemble optique (50) en dehors du trajet du faisceau optique au moyen de l'unité de positionnement de telle sorte que le rayonnement de mesure (55) s'étende de manière décalée par rapport à l'ensemble optique (50), et/ou
• ladite au moins une autre distance peut être produite en déplaçant linéairement ladite au moins première ou deuxième cible de référence rétroréfléchissante (70, 71) et/ou l'ensemble optique (50) parallèlement au trajet de faisceau optique.

7. Laser de poursuite (10, 11) selon l'une des revendications 1 à 6, **caractérisé en ce que**
le laser de poursuite (10, 11) présente une unité de commande et d'évaluation conçue de telle sorte que, pour déterminer ledit au moins un paramètre d'étalonnage, une fonctionnalité d'étalonnage peut être réalisée en
• réalisant une mesure à deux positions avec la distance simulée et/ou avec ladite au moins une autre distance, deux mesures dans deux positions à deux angles de pivotement horizontal différents et à deux angles de pivotement vertical différents étant effectuées dans le cadre de la mesure à deux positions et, pour chacune des deux mesures,
□ le rayonnement de mesure (55) est orienté sur la cible de référence (70, 71) de l'unité d'auto-étalonnage (60) fournissant la distance simulée et/ou ladite au moins une autre distance en orientant l'unité de déviation de faisceau (16, 20) par rapport à la base (40),
□ l'angle de pivotement horizontal respectif et l'angle de pivotement vertical respectif sont déterminés et
□ dans chaque cas, la position d'impact du rayonnement de mesure (55) réfléchi sur la cible de référence (70, 71) respective sur le détecteur surfacique photosensible (21) est déterminée, et en
• dérivant ledit au moins un paramètre d'étalonnage en fonction des angles de pivotement horizontal, des angles de pivotement vertical et des positions d'impact déterminés,
la mesure à deux positions représentant la première mesure d'étalonnage.

8. Laser de poursuite (10, 11) selon la revendication 7,
**caractérisé en ce que**
l'unité de commande et d'évaluation est conçue de telle sorte que, lorsqu'une mesure à deux positions est effectuée respectivement pour la distance simulée et ladite au moins une autre distance dans le cadre de la fonctionnalité d'étalonnage,
• le point de servo-contrôle (23) sur le détecteur surfacique sensible à la position (21) pour régler l'orientation du rayonnement de mesure (55) sur la cible (103) dans le cadre de la fonction de poursuite de cible,
• le décalage (28), en particulier le décalage parallèle, entre l'axe cible (27) défini par la configuration structurelle de l'unité de déviation de faisceau (16, 20) et l'axe d'émission (25) défini par l'émission du rayonnement de mesure (55) et
• l'erreur d'axe cible indiquant le décalage angulaire entre l'axe cible (27) et l'axe d'émission (25)
sont déterminés en tant que paramètres d'étalonnage.

9. Laser de poursuite (10, 11) selon la revendication 7 ou 8,
**caractérisé en ce que**,
dans le cadre de la réalisation de la fonctionnalité d'étalonnage, une telle simulation angulaire peut être effectuée au moins par rapport à la première cible de référence rétroréfléchissante (70, 71) en visant au moins la première cible de référence rétroréfléchissante (70, 71) au moyen de l'ensemble optique (50), qu'une différence dans les angles de pivotement horizontal, les angles de pivotement vertical et la position d'impact pouvant être déterminée par la mesure à deux positions est déterminée comme si ladite au moins première cible de référence rétroréfléchissante (70, 71) était plus éloignée que la cible de référence (70, 71) ne l'est effectivement du fait de la distance existante structurellement (d', d1, d2, dₙ).

10. Laser de poursuite (10, 11) selon l'une des revendications 1 à 9, **caractérisé en ce que**
l'unité d'auto-étalonnage (60) présente une unité de guidage de faisceau pour définir le trajet de faisceau optique et pour guider le rayonnement de mesure (55) vers ladite au moins première et/ou deuxième cible de référence rétroréfléchissante (70, 71), en particulier l'unité de guidage de faisceau étant conçue de telle sorte que le rayonnement de mesure (55) peut être dévié par l'unité de guidage de faisceau, en particulier au moyen d'un miroir.

11. Laser de poursuite (10, 11) selon l'une des revendications 1 à 10, **caractérisé en ce que**
le laser de poursuite (10, 11), en particulier l'unité de commande et d'évaluation, est conçu de telle sorte qu'un procédé d'étalonnage selon l'une des revendications 12 à 14 peut être mis en oeuvre.

12. Procédé d'étalonnage pour un laser de poursuite (10, 11) qui est conçu pour déterminer la position d'une cible (103) et en particulier pour suivre en continu la cible (103) et qui présente
• une source de faisceau pour produire un rayonnement de mesure (55),
• une base (40) définissant un axe vertical (41),
• un support (30) qui définit un axe de basculement sensiblement orthogonal à l'axe vertical (41), dans lequel
□ le support (30) peut pivoter de manière motorisée par rapport à la base (40) autour de l'axe vertical (41) et
□ un angle de pivotement horizontal est défini par une orientation du support (30) par rapport à la base (40),
• une unité de déviation de faisceau (16, 20) pouvant pivoter de manière motorisée autour de l'axe de basculement par rapport au support (30), un angle de pivotement vertical étant défini par une orientation de l'unité de déviation de faisceau (16, 20) par rapport au support (30),
□ pour l'émission et l'orientation du rayonnement de mesure (55) et
□ pour la réception d'au moins une partie du rayonnement de mesure (55) réfléchi sur la cible (103), et
• un détecteur surfacique photosensible (21) pour détecter une position d'impact du rayonnement de mesure (55) réfléchi sur le détecteur surfacique (21) et pour produire un signal de sortie pour commander une fonctionnalité de poursuite de cible,
dans lequel, dans le cadre du procédé d'étalonnage, au moins une mesure d'étalonnage par rapport à au moins une première cible de référence réfléchissante (70, 71) est effectuée en
• déterminant l'angle de pivotement horizontal, l'angle de pivotement vertical et la position d'impact du rayonnement de mesure (55) réfléchi sur ladite au moins première cible de référence rétroréfléchissante (70, 71) sur le détecteur surfacique photosensible (21) et en
• dérivant au moins un paramètre d'étalonnage par rapport à une position et/ou une direction du rayonnement de mesure (55) en fonction de l'angle de pivotement horizontal déterminé, de l'angle de pivotement vertical déterminé et de la position d'impact déterminée,
**caractérisé en ce que**
lors de l'exécution de ladite au moins une mesure d'étalonnage, ladite au moins première cible de référence rétroréfléchissante (70, 71) est visée de telle manière qu'un trajet de faisceau optique du rayonnement de mesure (55) traverse un ensemble optique (50) ayant un effet réducteur et le rayonnement de mesure (55) frappe ladite au moins première cible de référence rétroréfléchissante (70, 71), de sorte que la mesure d'étalonnage est effectuée avec une distance simulée en ce qui concerne des grandeurs de mesure pertinentes pour la détermination dudit au moins un paramètre d'étalonnage, la distance simulée à ladite au moins première cible de référence rétroréfléchissante (70, 71) étant supérieure à une distance effectivement existante structurellement (d', d1, d2, dn), en particulier les grandeurs de mesure pertinentes étant représentées par l'angle de pivotement horizontal, l'angle de pivotement vertical et/ou la position d'impact sur le détecteur surfacique photosensible (21).

13. Procédé d'étalonnage selon la revendication 12,
**caractérisé en ce que**
au moins une autre distance, en particulier une distance simulée, est fournie en visant une deuxième cible de référence rétroréfléchissante (70, 71) et/ou ladite au moins une autre distance est produite en déplaçant l'ensemble optique (50) par rapport à ladite au moins première et/ou deuxième cible de référence rétroréfléchissante (70, 71).

14. Procédé d'étalonnage selon l'une des revendications 12 ou 13,
**caractérisé en ce que**,
pour la distance simulée et/ou pour ladite au moins une autre distance, au moins deux mesures d'étalonnage, en particulier chaque fois deux mesures d'étalonnage, sont effectuées à deux angles de pivotement horizontal différents et à deux angles de pivotement vertical différents et pour chaque mesure d'étalonnage
• le rayonnement de mesure (55) est orienté sur ladite première et/ou deuxième cible de référence rétroréfléchissante (70, 71) en orientant l'unité de déviation de faisceau (16, 20) par rapport à la base (40),
• l'angle de pivotement horizontal respectif et l'angle de pivotement vertical respectif sont déterminés et
• dans chaque cas, la position d'impact sur le détecteur surfacique photosensible (21) est déterminée, et
ledit au moins un paramètre d'étalonnage est dérivé en fonction des angles de pivotement horizontal, des angles de pivotement vertical et des positions d'impact, en particulier dans lequel
• un point de servo-contrôle (23) sur le détecteur surfacique sensible à la position (21) pour régler une orientation du rayonnement de mesure (55) sur la cible (103),
• un décalage (28), en particulier un décalage parallèle, entre un axe cible (27) défini par la configuration structurelle de l'unité de déviation de faisceau (16, 20) et un axe d'émission (25) défini par l'émission du rayonnement de mesure (55) et
• une erreur d'axe cible indiquant un décalage angulaire entre l'axe cible (27) et l'axe d'émission (25)
sont déterminés en tant que paramètres d'étalonnage.

15. Produit programme d'ordinateur qui est stocké sur un support lisible par machine,
• pour commander l'exécution de ladite au moins une mesure d'étalonnage pour au moins une distance simulée et
• pour exécuter la dérivation dudit au moins un paramètre d'étalonnage d'un procédé d'étalonnage selon l'une des revendications 12 à 14 lorsque ledit produit programme d'ordinateur est exécuté sur une unité de commande et d'évaluation du laser de poursuite (10, 11) selon l'une des revendications 1 à 11.
